# EUROPEAN PATENT APPLICATION

(11) **EP 4 761 448 A1**
(43) Date of publication of application: **17.06.2026**
(21) Application number: 23948128.6
(22) Date of filing: 10.08.2023
(51) Int. Cl.: H04W 74/08, H04W 74/00

(54) **RANDOM ACCESS METHOD, TERMINAL, NETWORK DEVICE, COMMUNICATION DEVICE, AND STORAGE MEDIUM**

(71) Applicant: Beijing Xiaomi Mobile Software Co., Ltd., Beijing 100085 (CN)
(72) Inventor: LI, Yanhua, Beijing 100085 (CN); LIU, Xiaofei, Beijing 100085 (CN); QIAO, Xuemei, Beijing 100085 (CN)
(74) Representative: Dehns Germany Partnerschaft mbB
(86) International application number: PCT/CN2023/112399
(87) International publication number: WO 2025/030558

(57) **Abstract**

The present disclosure relates to the technical field of communications, and in particular to a random access method, a terminal, a network device, a communication device, and a storage medium. The random access method comprises: determining a first random access resource for random access, wherein the first random access resource is determined on the basis of a characteristic supported by a terminal and configuration condition of a second random access resource, and the second random access resource is associated with an eRedCap characteristic and a RedCap characteristic; and performing random access on the first random access resource. According to the present disclosure, when a network device possibly configures the random access resource associated with the eRedCap characteristic and the RedCap characteristic, the terminal can be ensured to be able to perform random access, avoiding the communication problem caused by the terminal being unable to determine the first random access resource for random access when the second random access resource is introduced.

## Description

### TECHNICAL FIELD

The present disclosure relates to the field of communication technologies, and in particular, to a random access method, a terminal, a network device, a communication device, and a storage medium.

### BACKGROUND

In Rel-17, the 3rd Generation Partnership Project (3rd Generation Partnership Project, 3GPP) proposed a new type of terminal called a Reduced Capability (Reduced Capability, RedCap) terminal, or simply called a New Radio light (New Radio light, NR-lite) terminal. Similar to Internet of Things (IoT) devices in Long Term Evolution (Long Term Evolution, LTE), RedCap terminals usually need to meet the following requirements:
1) low cost and low complexity;
2) a certain degree of coverage enhancement;
3) power saving.

A terminal may indicate the terminal type to a network device, for example, the type may include a RedCap terminal. However, there are some technical problems with the current way of indicating the terminal type to the network device.

### SUMMARY

Embodiments of the present disclosure provide a random access method, a terminal, a network device, a communication device, and a storage medium to solve technical problems in related technologies.

According to a first aspect of the embodiments of the present disclosure, a random access method is provided, which is performed by a terminal and includes: determining a first random access resource for random access, where the first random access resource is determined based on a feature supported by the terminal and a configuration status of a second random access resource, and the second random access resource is associated with an enhanced Reduced Capability (eRedCap) feature and a Reduced Capability (RedCap) feature; and performing random access on the first random access resource.

According to a second aspect of the embodiments of the present disclosure, a random access method is provided, which is performed by a network device and includes: performing random access with a terminal on a first random access resource for random access; where the first random access resource is determined based on a feature supported by the terminal and a configuration status of a second random access resource; and the second random access resource is associated with an eRedCap feature and a RedCap feature.

According to a third aspect of the embodiments of the present disclosure, a random access apparatus is provided, which includes: a resource determination module, configured to determine a first random access resource for random access, where the first random access resource is determined based on a feature supported by the terminal and a configuration status of a second random access resource, and the second random access resource is associated with an eRedCap feature and a RedCap feature; and a first random access module, configured to perform random access on the first random access resource.

According to a fourth aspect of the embodiments of the present disclosure, a random access apparatus is provided, which includes: a second random access module, configured to perform random access with a terminal on a first random access resource for random access; where the first random access resource is determined based on a feature supported by the terminal and a configuration status of a second random access resource; and the second random access resource is associated with an eRedCap feature and a RedCap feature.

According to a fifth aspect of the embodiments of the present disclosure, a terminal is provided, which includes: one or more processors; where the terminal is configured to perform the random access method of the first aspect.

According to a sixth aspect of the embodiments of the present disclosure, a network device is provided, which includes: one or more processors; where the network device is configured to perform the random access method of the second aspect.

According to a seventh aspect of the embodiments of the present disclosure, a communication device is provided, which includes: one or more processors; where the one or more processors are configured to invoke instructions to cause the communication device to perform the random access method of the first aspect and/or the random access method of the second aspect.

According to an eighth aspect of the embodiments of the present disclosure, a communication system is provided, which includes a terminal and a network device, where the terminal is configured to implement the random access method of the first aspect, and the network device is configured to implement the random access method of the second aspect.

According to a ninth aspect of the embodiments of the present disclosure, a storage medium is provided, which stores instructions that, when run on a communication device, cause the communication device to perform the random access method of the first aspect and/or the random access method of the second aspect.

According to the embodiments of the present disclosure, the terminal can determine the first random access resource for random access based on the feature supported by the terminal and the configuration status of the second random access resource, and perform random access with the network device on the determined first random access resource. Therefore, in a scenario where the network device may configure a random access resource associated with the eRedCap feature and the RedCap feature, the terminal can determine the first random access resource for random access based on whether the second random access resource is configured and the feature supported by the terminal, thereby ensuring that the terminal can perform random access and avoiding communication problems caused by the terminal being unable to determine the first random access resource for random access when the second random access resource is introduced.

### BRIEF DESCRIPTION OF DRAWINGS

To describe the technical solutions in the embodiments of the present disclosure more clearly, the following briefly introduces the accompanying drawings required for describing the embodiments. Obviously, the accompanying drawings in the following description are only some embodiments of the present disclosure, and those of ordinary skill in the art can obtain other drawings according to these drawings without creative efforts.
FIG. 1 is a schematic diagram of an architecture of a communication system according to an embodiment of the present disclosure.
FIG. 2 is an interaction schematic diagram of a random access method according to an embodiment of the present disclosure.
FIG. 3 is a schematic flowchart of a random access method according to an embodiment of the present disclosure.
FIG. 4 is a schematic flowchart of another random access method according to an embodiment of the present disclosure.
FIG. 5 is a schematic block diagram of a terminal according to an embodiment of the present disclosure.
FIG. 6 is a schematic block diagram of a network device according to an embodiment of the present disclosure.
FIG. 7 is a schematic structural diagram of a communication device according to an embodiment of the present disclosure.
FIG. 8 is a schematic structural diagram of a chip according to an embodiment of the present disclosure.

### DETAILED DESCRIPTION

Embodiments of the present disclosure provide a random access method, an apparatus, a terminal, a network device, a communication device, and a storage medium.

In a first aspect, embodiments of the present disclosure provide a random access method performed by a terminal. The method includes: determining a first random access resource for random access, where the first random access resource is determined based on a feature supported by the terminal and a configuration status of a second random access resource, and the second random access resource is associated with an enhanced Reduced Capability (eRedCap) feature and a Reduced Capability (RedCap) feature; and performing random access on the first random access resource.

In the above embodiment, the terminal can determine the first random access resource for random access based on the feature supported by the terminal and the configuration status of the second random access resource, and perform random access with the network device on the determined first random access resource. Therefore, in a scenario where the network device may configure a random access resource associated with the eRedCap feature and the RedCap feature, the terminal can determine the first random access resource for random access based on whether the second random access resource is configured and the feature supported by the terminal, thereby ensuring that the terminal can perform random access and avoiding communication problems caused by the terminal being unable to determine the first random access resource for random access when the second random access resource is introduced.

With reference to some embodiments of the first aspect, in some embodiments, the feature supported by the terminal includes at least one of: eRedCap feature; or RedCap feature.

With reference to some embodiments of the first aspect, in some embodiments, the feature supported by the terminal includes the eRedCap feature, or the feature supported by the terminal includes the eRedCap feature and the RedCap feature, and in response to determining that the terminal is configured with the second random access resource, the second random access resource is available.

With reference to some embodiments of the first aspect, in some embodiments, the feature supported by the terminal includes the RedCap feature, and in response to determining that the terminal is configured with the second random access resource, the second random access resource is unavailable.

With reference to some embodiments of the first aspect, in some embodiments, the terminal is allowed to be configured with the second random access resource.

With reference to some embodiments of the first aspect, in some embodiments, the feature supported by the terminal includes the eRedCap feature, or the feature supported by the terminal includes the eRedCap feature and the RedCap feature;
where determining the first random access resource for the random access includes any one of:
determining that the first random access resource includes the second random access resource, where the terminal is configured with the second random access resource;
determining that the first random access resource includes a fourth random access resource, where the terminal is not configured with the second random access resource and a third random access resource and is configured with the fourth random access resource, and where the third random access resource is associated with the eRedCap feature, and the fourth random access resource is associated with the RedCap feature.

With reference to some embodiments of the first aspect, in some embodiments, the feature supported by the terminal includes the RedCap feature, and determining the first random access resource for the random access includes:
determining that the second random access resource is unavailable, where the terminal is configured with the second random access resource.

With reference to some embodiments of the first aspect, in some embodiments, the terminal is allowed to be configured with the second random access resource, and the terminal is not allowed to be configured with the second random access resource and the third random access resource.

With reference to some embodiments of the first aspect, in some embodiments, the feature supported by the terminal includes the eRedCap feature, and determining the first random access resource for the random access includes any one of:
determining that the first random access resource includes a third random access resource, where the terminal is configured with the second random access resource and the third random access resource;
determining that the first random access resource includes the second random access resource, where the terminal is configured with the second random access resource and is not configured with the third random access resource.

With reference to some embodiments of the first aspect, in some embodiments, the feature supported by the terminal includes the eRedCap feature and the RedCap feature, and determining the first random access resource for the random access includes:
determining that the first random access resource includes the second random access resource, where the terminal is configured with the second random access resource.

With reference to some embodiments of the first aspect, in some embodiments, the feature supported by the terminal includes the RedCap feature, and determining the first random access resource for the random access includes any one of:
determining that the second random access resource is unavailable, where the terminal is configured with the second random access resource, or the terminal is configured with the second random access resource, a third random access resource, and a fourth random access resource;
determining that the second random access resource and the third random access resource are unavailable, where the terminal is configured with the second random access resource and the third random access resource.

With reference to some embodiments of the first aspect, in some embodiments, the terminal is allowed to be configured with the second random access resource, and the terminal is allowed to be configured with the second random access resource and the third random access resource.

With reference to some embodiments of the first aspect, in some embodiments, the terminal is not allowed to be configured with the second random access resource; the terminal does not expect to be configured with the second random access resource.

With reference to some embodiments of the first aspect, in some embodiments, the method further includes: receiving resource configuration information sent by a network device, where the resource configuration information includes a feature combination information element, and the feature combination information element indicates at least one kind of feature associated with a random access resource configured by the network device.

With reference to some embodiments of the first aspect, in some embodiments, the method further includes: determining, according to the feature combination information element, that the random access resource configured by the network device is associated with the eRedCap feature and the RedCap feature, and determining that the terminal is configured with the second random access resource.

With reference to some embodiments of the first aspect, in some embodiments, in response to determining that the first random access resource includes the second random access resource, the first random access resource is configured to indicate to the network device in the random access that the feature supported by the terminal includes at least the eRedCap feature.

In a second aspect, embodiments of the present disclosure provide a random access method performed by a network device. The method includes: performing random access with a terminal on a first random access resource for random access; where the first random access resource is determined based on a feature supported by the terminal and a configuration status of a second random access resource; and the second random access resource is associated with an eRedCap feature and a RedCap feature.

In the above embodiment, the network device can perform random access with the terminal on the first random access resource, where the first random access resource is determined based on the feature supported by the terminal and the configuration status of the second random access resource. Therefore, in a scenario where the network device may configure a random access resource associated with the eRedCap feature and the RedCap feature, the terminal can determine the first random access resource for random access based on whether the second random access resource is configured and the feature supported by the terminal, thereby ensuring that the terminal can perform random access and avoiding communication problems caused by the terminal being unable to determine the first random access resource for random access when the second random access resource is introduced.

With reference to some embodiments of the second aspect, in some embodiments, the method further includes: configuring random access resources for the terminal, where the first random access resource is determined from the random access resources configured by the network device for the terminal.

With reference to some embodiments of the second aspect, in some embodiments, the network device is allowed to configure the second random access resource; the network device expects to configure the second random access resource for the terminal.

With reference to some embodiments of the second aspect, in some embodiments, the network device determines that it is allowed to configure the second random access resource, and the network device determines that it is not allowed to configure the second random access resource and a third random access resource, where the third random access resource is associated with the eRedCap feature; the network device expects to configure the second random access resource for the terminal and not configure the third random access resource for the terminal, or the network device expects to not configure the second random access resource for the terminal and to configure the third random access resource for the terminal.

With reference to some embodiments of the second aspect, in some embodiments, the network device determines that it is allowed to configure the second random access resource, and the network device determines that it is allowed to configure the second random access resource and the third random access resource; the network device expects to configure the second random access resource, the third random access resource, or the second random access resource and the third random access resource for the terminal.

With reference to some embodiments of the second aspect, in some embodiments, the network device determines that it is not allowed to configure the second random access resource; the network device does not expect to configure the second random access resource for the terminal.

With reference to some embodiments of the second aspect, in some embodiments, configuring the random access resources for the terminal includes: determining a random access resource to be configured for the terminal; and sending resource configuration information to the terminal, where the resource configuration information includes a feature combination information element, and the feature combination information element indicates at least one kind of feature associated with the random access resource configured by the network device.

With reference to some embodiments of the second aspect, in some embodiments, the method further includes: determining, according to the first random access resource including the second random access resource, that the feature supported by the terminal includes at least the eRedCap feature.

In a third aspect, embodiments of the present disclosure provide a random access apparatus. The apparatus includes:
a resource determination module, configured to determine a first random access resource for random access, where the first random access resource is determined based on a feature supported by a terminal and a configuration status of a second random access resource, and the second random access resource is associated with an eRedCap feature and a RedCap feature; and
a first random access module, configured to perform random access on the first random access resource.

In a fourth aspect, embodiments of the present disclosure provide a random access apparatus. The apparatus includes:
a second random access module, configured to perform random access with a terminal on a first random access resource for random access; where the first random access resource is determined based on a feature supported by the terminal and a configuration status of a second random access resource; and the second random access resource is associated with an eRedCap feature and a RedCap feature.

In a fifth aspect, embodiments of the present disclosure provide a terminal, including: one or more processors; where the terminal is configured to perform the random access method of the first aspect and optional embodiments of the first aspect.

In a sixth aspect, embodiments of the present disclosure provide a network device, including: one or more processors; where the network device is configured to perform the random access method of the second aspect and optional embodiments of the second aspect.

In a seventh aspect, embodiments of the present disclosure provide a communication device. The communication device includes: one or more processors; one or more memories for storing instructions; where the one or more processors are configured to invoke the instructions to cause the communication device to perform the methods described in the first aspect, the second aspect, and optional embodiments of the first and second aspects.

In an eighth aspect, embodiments of the present disclosure provide a communication system. The communication system includes a terminal and a network device; where the terminal is configured to perform the methods described in the first aspect, the second aspect, and optional embodiments of the first and second aspects, and the network device is configured to perform the methods described in the first aspect, the second aspect, and optional embodiments of the first and second aspects.

In a ninth aspect, embodiments of the present disclosure provide a storage medium. The storage medium stores instructions that, when run on a communication device, cause the communication device to perform the methods described in the first aspect, the second aspect, and optional embodiments of the first and second aspects.

In a tenth aspect, embodiments of the present disclosure provide a program product. When the program product is executed by a communication device, the communication device is caused to perform the methods described in the first aspect, the second aspect, and optional embodiments of the first and second aspects.

In an eleventh aspect, embodiments of the present disclosure provide a computer program. When the computer program runs on a computer, the computer is caused to perform the methods described in the first aspect, the second aspect, and optional embodiments of the first and second aspects.

It can be understood that the above-mentioned terminal, network device, communication device, communication system, storage medium, program product, and computer program are all configured to perform the methods provided in the embodiments of the present disclosure. Therefore, the beneficial effects that can be achieved may refer to the beneficial effects in the corresponding methods, which will not be repeated here.

The embodiments of the present disclosure provide a random access method, a terminal, a network device, a communication device, and a storage medium. In some embodiments, the term such as "random access method" may be interchanged with terms such as "information processing method", "communication method"; the terms such as "terminal" and "network device" may be interchanged with terms such as "random access apparatus" and "communication apparatus"; and the term such as "random access system" may be interchanged with the term "communication system".

The embodiments of the present disclosure are not exhaustive and are only illustrative of some embodiments, and are not intended to specifically limit the protection scope of the present disclosure. Without contradiction, each step in a certain embodiment may be implemented as an independent embodiment, and the steps may be combined arbitrarily. For example, a solution with some steps removed from a certain embodiment may also be implemented as an independent embodiment, and the order of the steps in a certain embodiment may be exchanged arbitrarily. In addition, optional implementations in a certain embodiment may be combined arbitrarily. Furthermore, the embodiments may be combined arbitrarily. For example, some or all steps of different embodiments may be combined arbitrarily, and a certain embodiment may be combined with one or more optional implementations of other embodiments arbitrarily.

In the various embodiments of the present disclosure, unless otherwise specified and logically conflicting, the terms and/or descriptions among the various embodiments are consistent and may be referred to each other. Technical features in different embodiments may be combined to form new embodiments according to their inherent logical relationships.

The terms used in the embodiments of the present disclosure are merely for the purpose of describing specific embodiments and are not intended to limit the present disclosure.

In the embodiments of the present disclosure, unless otherwise stated, elements expressed in singular form, such as "a", "an", "the", "the aforementioned", "said", "foregoing", "this", etc., may mean "one and only one", or "one or more", "at least one", etc.

For example, when articles such as "a", "an", and "the" in English are used in the translation, the noun following the article may be understood as a singular expression or a plural expression.

In the embodiments of the present disclosure, "a plurality of" means two or more.

In some embodiments, terms such as "at least one of", "one or more", "a plurality of", and "multiple" may be substituted for each other.

In some embodiments, recitations such as "at least one of A and B", "A and/or B", "A in one case, B in another case", "in response to a case A, in response to another case B", etc., may include the following technical solutions according to the situation: A in some embodiments (executing A independently of B); B in some embodiments (executing B independently of A); selecting and executing from A and B in some embodiments (A and B are selectively executed); A and B in some embodiments (both A and B are executed). The same applies when there are more branches such as A, B, and C.

In some embodiments, recitations such as "A or B" may include the following technical solutions according to the situation: A in some embodiments (executing A independently of B); B in some embodiments (executing B independently of A); selecting and executing from A and B in some embodiments (A and B are selectively executed). The same applies when there are more branches such as A, B, and C.

Prefixes such as "first" and "second" in the embodiments of the present disclosure are merely used to distinguish different description objects, and do not limit the position, order, priority, quantity, content, etc., of the description objects. For the statement of the description objects, reference can be made to the description in the context of the claims or the embodiments, and no redundant limitation shall be constituted due to the use of prefixes.

For example, if the description object is a "field", the ordinal numbers before "field" in "first field" and "second field" do not limit the position or order between "fields", and "first" and "second" do not limit whether the "fields" modified by "first" and "second" are in the same message, nor do they limit the order of the "first field" and the "second field". For another example, if the description object is a "level", the ordinal numbers before "level" in "first level" and "second level" do not limit the priority between "levels". For another example, the quantity of the description objects is not limited by the ordinal numbers, and may be one or more. Taking "first apparatus" as an example, the quantity of " apparatuses" therein may be one or more. In addition, objects modified by different prefixes may be the same or different. For example, if the description object is an " apparatus", a "first apparatus" and a "second apparatus" may be the same apparatus or different apparatuses, and the types of the "first apparatus" and the "second apparatus" may be the same or different. For another example, if the description object is "information", "first information" and "second information" may be the same information or different information, and the contents of the "first information" and the "second information" may be the same or different.

In some embodiments, "including A", "comprising A", " indicating A", and "carrying A" may be interpreted as directly carrying A or indirectly indicating A.

In some embodiments, terms such as "in response to...", "in response to determining...", "in a case where...", "when...", "at the time of...", "if...", and "in the event that..." may be substituted for each other.

In some embodiments, terms such as "greater than", "greater than or equal to", "not less than", "more than", "more than or equal to", "no less than", "higher than", "higher than or equal to", "not lower than", and "above" may be used interchangeably; terms such as "less than", "less than or equal to", "not greater than", "fewer than", "fewer than or equal to", "no more than", "lower than", "lower than or equal to", "not higher than", and "below" may be used interchangeably.

In some embodiments, an apparatus may be interpreted as physical or virtual entities, and their names are not limited to those
recorded in the embodiments, and the terms such as "apparatus", "equipment", "device", "circuit", "network element", "node", "function", "unit", "section", "system", "network", "chip", "", "entity", "subject" may be used interchangeably.

In some embodiments, "network" may be interpreted as the apparatuses included in the network, such as access network devices, core network devices, and the like.

In some embodiments, terms such as "access network (access network, AN) device", "radio access network (radio access network, RAN) device", "base station (base station, BS)", "radio base station", "fixed station", "node", "access point", "transmission point (transmission point, TP)", "reception point (reception point, RP)", "transmission/reception point (transmission/reception point, TRP)", "panel", "antenna panel", "antenna array", "cell", "macro cell", "small cell", "femto cell", "pico cell", "sector", "cell group", "serving cell", "carrier", "component carrier", "bandwidth part (bandwidth part, BWP)" may be used interchangeably.

In some embodiments, the terms such as "terminal", "terminal device", "user equipment (user equipment, UE)", "user terminal", "mobile station (mobile station, MS)", "mobile terminal (mobile terminal, MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client may be used interchangeably.

In some embodiments, an access network device, a core network device, or a network device may be replaced with a terminal. For example, a structure in which communication between an access network device, a core network device, or a network device and a terminal is replaced with communication between multiple terminals (such as device-to-device (device-to-device, D2D), vehicle-to-everything (vehicle-to-everything, V2X), etc.) may also apply to the embodiments of the present disclosure. In this case, the terminal may also be configured to have all or part of the functions of the access network device. In addition, terms such as "uplink" and "downlink" may also be replaced with terms corresponding to inter-terminal communication (such as "sidelink"). For example, an uplink channel, a downlink channel, etc. may be replaced with a sidelink channel, and uplink, downlink, etc. may be replaced with sidelink.

In some embodiments, a terminal may be replaced with an access network device, a core network device, or a network device. In this case, a structure may be adopted in which the access network device, the core network device, or the network device has all or part of the functions of the terminal.

In some embodiments, the acquisition of data, information, etc., complies with the laws and regulations of the country where the acquisition takes place.

In some embodiments, data, information, etc., is acquired after receiving user consent.

In addition, each element, each row, or each column in the tables of the embodiments of the present disclosure can be implemented as an independent embodiment, and combinations of any elements, any rows, or any columns can also be implemented as an independent embodiment.

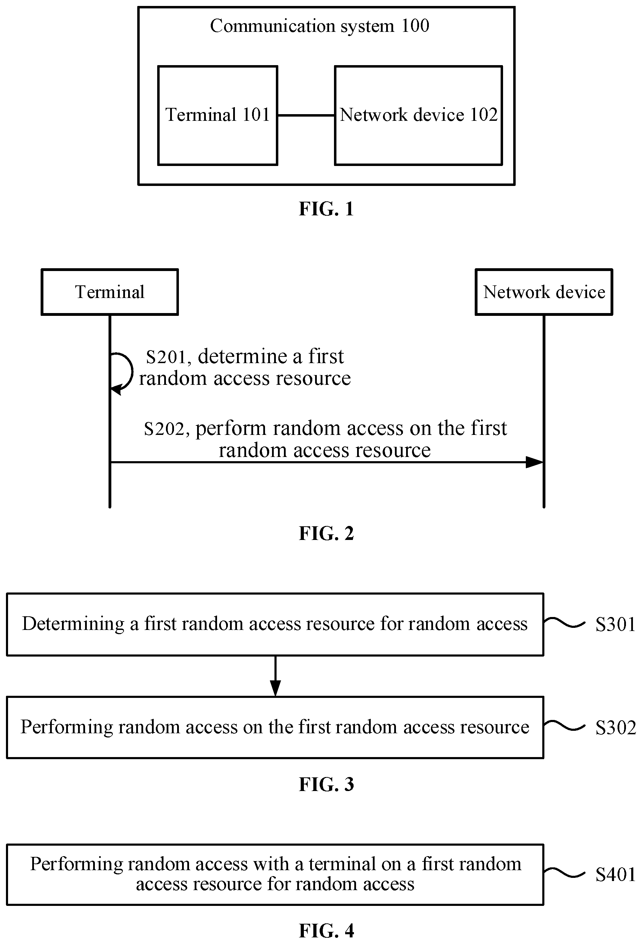

FIG. 1 is a schematic diagram of an architecture of a communication system according to an embodiment of the present disclosure.

As shown in FIG. 1, the communication system 100 includes a terminal 101 and a network device 102, where the network device includes at least one of: an access network device, a core network device.

In some embodiments, the terminal 101 includes, for example, at least one of a mobile phone, a wearable device, an Internet of Things device, a vehicle with a communication function, an intelligent vehicle, a tablet computer (Pad), a computer with a wireless transceiver function, a virtual reality (virtual reality, VR) terminal device, an augmented reality (augmented reality, AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, or a wireless terminal device in a smart home, but is not limited thereto.

In some embodiments, an access network device is, for example, a node or a device that accesses a terminal to a wireless network. The access network device may include at least one of an evolved NodeB (evolved NodeB, eNB) in a 5G communication system, a next generation eNB (next generation eNB, ng-eNB), a next generation NodeB (next generation NodeB, gNB), a NodeB (NB), a home NodeB (HNB), a home evolved NodeB (HeNB), a wireless backhaul device, a radio network controller (radio network controller, RNC), a base station controller (base station controller, BSC), a base transceiver station (base transceiver station, BTS), a baseband unit (baseband unit, BBU), a mobile switching center, a base station in a 6G communication system, an Open Radio Access Network (Open RAN) base station, a Cloud RAN base station, a base station in other communication systems, or an access node in a Wi-Fi system, but is not limited thereto.

In some embodiments, the core network device may be one device including one or more network elements, or a plurality of devices or device groups respectively including all or part of the one or more network elements. The network elements may be virtual or physical. The core network includes, for example, at least one of an Evolved Packet Core (Evolved Packet Core, EPC), a 5G Core Network (5G Core Network, 5GCN), and a Next Generation Core (Next Generation Core, NGC).

In some embodiments, the technical solutions of the present disclosure may be applied to an Open RAN architecture. In this case, interfaces between access network devices or within an access network device involved in the embodiments of the present disclosure may become internal interfaces of the Open RAN, and the processes and information exchange between these internal interfaces may be implemented through software or programs.

In some embodiments, an access network device may consist of a central unit (central unit, CU) and a distributed unit (distributed unit, DU). The CU may also be referred to as a control unit. The adoption of the CU-DU structure enables the protocol layers of the access network device to be split, with the functions of some protocol layers placed in the CU for centralized control, and the functions of the remaining part or all of the protocol layers distributed in the DUs, which are centrally controlled by the CU, but the present disclosure is not limited thereto.

It can be understood that the communication system described in the embodiments of the present disclosure is for clearer explanation of the technical solutions of the embodiments of the present disclosure, and does not constitute a limitation on the technical solutions provided in the embodiments of the present disclosure. A person of ordinary skill in the art knows that with the evolution of the system architecture and the emergence of new service scenarios, the technical solutions provided in the embodiments of the present disclosure are also applicable to similar technical problems.

The following embodiments of the present disclosure may be applied to the communication system 100 shown in FIG. 1 or some entities of the communication system 100, but are not limited thereto. Each entity shown in FIG. 1 is exemplary. The communication system may include all or part of the entities in FIG. 1, and may also include other entities not shown in FIG. 1. The number and form of each entity are arbitrary, and each entity may be physical or virtual. The connection relationship between the entities is exemplary. The entities may or may not be connected, and the connection may be in any manner, either direct or indirect, and either wired or wireless.

The embodiments of the present disclosure may be applied to Long Term Evolution (Long Term Evolution, LTE), LTE-Advanced (LTE-A), LTE-Beyond (LTE-B), SUPER 3G, International Mobile Telecommunications-Advanced (IMT-Advanced), a 4th generation mobile communication system (4th generation mobile communication system, 4G), a 5th generation mobile communication system (5th generation mobile communication system, 5G), 5G new radio (new radio, NR), Future Radio Access (Future Radio Access, FRA), New-Radio Access Technology (New-Radio Access Technology, New-RAT), New Radio (New Radio, NR), New Radio Access (New Radio Access, NX), Future Generation Radio Access (Future Generation Radio Access, FX), Global System for Mobile Communications (GSM) (registered trademark), CDMA2000, Ultra Mobile Broadband (Ultra Mobile Broadband, UMB), IEEE 802.11 (Wi-Fi) (registered trademark), IEEE 802.16 (WiMAX) (registered trademark), IEEE 802.20, Ultra-WideBand (Ultra-WideBand, UWB), Bluetooth (registered trademark), a Public Land Mobile Network (Public Land Mobile Network, PLMN), a Device-to-Device (Device-to-Device, D2D) system, a Machine to Machine (Machine to Machine, M2M) system, an Internet of Things (Internet of Things, IoT) system, Vehicle-to-Everything (Vehicle-to-Everything, V2X), a system using other communication methods, and a next-generation system extended based on them. In addition, multiple systems may be combined (for example, a combination of LTE or LTE-A and 5G) for application.

FIG. 2 is an interaction schematic diagram of a random access method according to an embodiment of the present disclosure.

As shown in FIG. 2, the random access method includes:
step S201: the terminal determines a first random access resource; and
step S202: the terminal performs random access with the network device on the first random access resource.

In some embodiments, the first random access resource may be a random access resource for random access. In some embodiments, the random access resource may be a time domain resource and/or a frequency domain resource.

In some embodiments, the network device may configure random access resources for the terminal.

In some embodiments, the first random access resource may be determined by the terminal from a set of random access resources configured by the network device for the terminal.

In some embodiments, the network device may determine a random access resource to be configured for the terminal.

In some embodiments, the network device may send resource configuration information to the terminal, where the resource configuration information includes a feature combination information element. The feature combination information element may indicate at least one kind of feature associated with the random access resource configured by the network device.

In some embodiments, the terminal may receive the resource configuration information sent by the network device, where the resource configuration information includes the feature combination information element.

In some embodiments, the terminal may determine, according to the feature combination information element, that the random access resource configured by the network device is associated with the eRedCap feature and the RedCap feature, and determine that the terminal is configured with the second random access resource.

In some embodiments, the feature supported by the terminal may include at least one of: eRedCap feature; or RedCap feature.

In some embodiments, the feature supported by the terminal includes the eRedCap feature, or the feature supported by the terminal includes the eRedCap feature and the RedCap feature. When the terminal is configured with the second random access resource, the second random access resource is available.

In some embodiments, the feature supported by the terminal includes the RedCap feature. When the terminal is configured with the second random access resource, the second random access resource is unavailable.

In some embodiments, the terminal may be allowed to be configured with the second random access resource.

In some embodiments, the feature supported by the terminal includes the eRedCap feature, or the feature supported by the terminal includes the eRedCap feature and the RedCap feature. Determining the first random access resource for the random access includes any one of: determining that the first random access resource includes the second random access resource, where the terminal is configured with the second random access resource; determining that the first random access resource includes a fourth random access resource, where the terminal is not configured with the second random access resource and a third random access resource and is configured with the fourth random access resource; and where the third random access resource is associated with the eRedCap feature, and the fourth random access resource is associated with the RedCap feature.

In some embodiments, the feature supported by the terminal includes the RedCap feature. Determining the first random access resource for the random access includes: determining that the second random access resource is unavailable, where the terminal is configured with the second random access resource.

In a possible implementation, the terminal is allowed to be configured with the second random access resource, and the terminal is not allowed to be configured with the second random access resource and the third random access resource.

In some embodiments, the feature supported by the terminal includes the eRedCap feature. Determining the first random access resource for the random access includes any one of: determining that the first random access resource includes the third random access resource, where the terminal is configured with the second random access resource and the third random access resource; determining that the first random access resource includes the second random access resource, where the terminal is configured with the second random access resource and is not configured with the third random access resource.

In some embodiments, the feature supported by the terminal includes the eRedCap feature and the RedCap feature. Determining the first random access resource for the random access includes: determining that the first random access resource includes the second random access resource, where the terminal is configured with the second random access resource.

In some embodiments, the feature supported by the terminal includes the RedCap feature. Determining the first random access resource for the random access includes any one of: determining that the second random access resource is unavailable, where the terminal is configured with the second random access resource, or the terminal is configured with the second random access resource, the third random access resource, and the fourth random access resource; determining that the second random access resource and the third random access resource are unavailable, where the terminal is configured with the second random access resource and the third random access resource.

In a possible implementation, the terminal is allowed to be configured with the second random access resource, and the terminal is allowed to be configured with the second random access resource and the third random access resource.

In some embodiments, the terminal is not allowed to be configured with the second random access resource. The terminal does not expect to be configured with the second random access resource.

In some embodiments, the network device may determine, according to the first random access resource including the second random access resource, that the feature supported by the terminal includes at least the eRedCap feature.

The communication method involved in the embodiments of the present disclosure may include at least one of steps S201 to S202. For example, step S201 may be implemented as an independent embodiment, step S202 may be implemented as an independent embodiment, and steps S201 + S202 may be implemented as an independent embodiment, but is not limited thereto.

In some embodiments, steps S201 and S202 may be executed in a reversed order or simultaneously.

In some embodiments, step S201 is optional, and one or more of these steps may be omitted or replaced in different embodiments.

In some embodiments, step S202 is optional, and one or more of these steps may be omitted or replaced in different embodiments.

In some embodiments, reference may be made to other optional embodiments recorded before or after the description corresponding to FIG. 2.

In some embodiments, the time-frequency resources that a RedCap terminal can schedule are limited. Therefore, early indication is required, that is, the terminal type can be identified during the random access procedure to facilitate reasonable scheduling of time-frequency resources.

In some embodiments, early indication based on the terminal may be performed through Random Access Channel (Random Access Channel, RACH) partition. That is, random access resources may be divided according to different feature combinations to facilitate the terminal to determine, according to the feature combination supported by the terminal, a random access resource for early indication from the set of random access resources configured by the network device, and perform random access through the determined random access resource, so that the network device can determine the terminal type when performing random access with the terminal. For example, a part of the random access resources may be allocated as a feature combination preamble list (such as featureCombinationPreamblesList) for the RedCap feature.

The random access resource involved in the embodiments of the present disclosure may also be referred to as an early indication resource, a time-frequency resource for random access, a data transmission resource, etc.

To further reduce terminal costs, 3GPP introduced a new terminal type in Rel-18, such as an enhanced Reduced capability UE (eRedCap terminal). Since the uplink and downlink data transmission bandwidth of the eRedCap terminal is smaller than that of the RedCap terminal, the eRedCap terminal and the RedCap terminal are different types of terminals. For different types of terminals, in order to distinguish the terminal types through early indication, it is necessary to reasonably select random access resources.

In some embodiments, after the introduction of the eRedCap terminal in Rel-18, since the uplink and downlink data transmission bandwidth of the eRedCap terminal is smaller than that of the RedCap terminal, the eRedCap terminal and the RedCap terminal are different types of terminals. To distinguish the terminal types through early indication, the network device may configure a random access resource associated with at least the eRedCap feature for the terminal for early indication. That is, it is necessary to add at least a feature combination supporting the eRedCap feature (which may include one or more features) so that different types of terminals can reasonably select random access resources according to the feature combinations they support.

It should be noted that a random access resource being associated with a certain feature may also be described as the random access resource supporting the feature, or the feature combination corresponding to the random access resource including the certain feature.

In the first aspect, embodiments of the present disclosure provide a random access method. FIG. 3 is a schematic flowchart of a random access method according to an embodiment of the present disclosure. The random access method shown in this embodiment may be performed by a terminal.

As shown in FIG. 3, the random access method may include the following steps:
step S301: determining a first random access resource for random access; and
step S302: performing random access on the first random access resource.

It should be noted that the embodiment shown in FIG. 3 may be implemented independently or in combination with at least one other embodiment of the present disclosure, which may be selected according to needs and is not limited in the present disclosure.

In some embodiments, the first random access resource may be determined by the terminal from the random access resources configured by the network device for the terminal, based on the feature supported by the terminal.

In a possible implementation, for a RedCap terminal, the RedCap feature is applicable to the random access procedure initiated by the terminal.

In a possible implementation, for an eRedCap terminal, the eRedCap feature is applicable to the random access procedure initiated by the terminal.

In some embodiments, the random access resources configured by the network device may include at least one of the following: a second random access resource associated with the eRedCap feature and the RedCap feature; a third random access resource associated with the eRedCap feature; or a fourth random access resource associated with the RedCap feature. Optionally, the random access resources configured by the network device may further include other random access resources not associated with the eRedCap feature and/or the RedCap feature, which is not specifically limited herein.

For example, the terminal is an eRedCap terminal, and the feature supported by the terminal may include the eRedCap feature. When the terminal is configured with the third random access resource associated with the eRedCap feature, the terminal may determine the third random access resource as an available random access resource, further determine that the first random access resource includes the third random access resource, and perform random access on the determined first random access resource.

For example, the terminal is a RedCap terminal, and the feature supported by the terminal may include the RedCap feature. When the terminal is configured with the fourth random access resource associated with the RedCap feature, the terminal may determine the fourth random access resource as an available random access resource, further determine that the first random access resource includes the fourth random access resource, and perform random access on the determined first random access resource.

In some embodiments, the first random access resource may be determined based on the feature supported by the terminal and the configuration status of the second random access resource, and the second random access resource is associated with the eRedCap feature and the RedCap feature. In the above embodiment, in a scenario where the network device may configure the second random access resource associated with the eRedCap feature and the RedCap feature for the terminal, when the terminal determines the first random access resource for random access, in addition to considering the feature supported by the terminal, the terminal may also need to consider the configuration status of the second random access resource.

For example, the feature supported by the terminal may include the eRedCap feature. When the terminal is configured with the second random access resource and the third random access resource, the terminal may determine both the second random access resource and the third random access resource as available random access resources. Therefore, the terminal needs to further determine whether the first random access resource is the second random access resource or the third random access resource. Optionally, the network device may perform random access with the terminal on the first random access resource; where the first random access resource is determined based on the feature supported by the terminal and the configuration status of the second random access resource; and the second random access resource is associated with the eRedCap feature and the RedCap feature.

In some embodiments, the random access may include 4-step random access. The performing random access on the first random access resource may include: sending msg1 and/or msg3 to the network device on the first random access resource. The msg1 or msg3 sent on the first random access resource may be configured for early indication based on the terminal.

It should be noted that the current protocol does not specify whether the network device can configure a random access resource associated with the eRedCap feature and the RedCap feature for the terminal. Further, after introducing the random access resource associated with the eRedCap feature and the RedCap feature, how RedCap terminals, eRedCap terminals, or other types of terminals should select random access resources has not yet been clarified.

According to the embodiments of the present disclosure, the terminal can determine the first random access resource for random access based on the feature supported by the terminal and the configuration status of the second random access resource, and perform random access with the network device on the determined first random access resource. Therefore, in a scenario where the network device may configure a random access resource associated with the eRedCap feature and the RedCap feature, the terminal can determine the first random access resource for random access based on whether the second random access resource is configured and the feature supported by the terminal, thereby ensuring that the terminal can perform random access and avoiding communication problems caused by the terminal being unable to determine the first random access resource for random access when the second random access resource is introduced. In some embodiments, the feature supported by the terminal includes at least one of the following: eRedCap feature; or RedCap feature. For example, the terminal may be a first terminal supporting the eRedCap feature, or a second terminal supporting both the eRedCap feature and the RedCap feature, or a third terminal supporting the RedCap feature.

In the embodiments shown in the present disclosure, a terminal that supports neither the eRedCap feature nor the RedCap feature is referred to as a fourth terminal. For example, the fourth terminal may specifically be an enhanced Mobile BroadBand (eMBB) terminal or a legacy terminal.

In some possible implementations, the first terminal has a smaller baseband processing bandwidth than the third terminal or the fourth terminal.

In some embodiments, the feature applicable to the random access procedure initiated by the terminal may be determined by the higher layer of the terminal. The higher layer may include the media access control (MAC) layer and layers above the MAC layer. The layers above the MAC layer may include the radio resource control (RRC) layer, and/or higher layers, and/or the Non-Access Stratum (NAS).

In a possible implementation, for a RedCap terminal, the higher layer of the RedCap terminal may determine that the "RedCap" feature is applicable to the random access procedure initiated by the terminal for a certain random access resource.

In another possible implementation, it may be specified by the protocol that for a RedCap terminal, the "RedCap" feature is applicable to the random access procedure initiated by the terminal.

In some embodiments, the terminal is allowed to be configured with the second random access resource.

For example, the protocol specifies that the feature combination corresponding to the random access resource includes the eRedCap feature and the RedCap feature, and the terminal may be allowed to be configured with the second random access resource supporting the eRedCap feature and the RedCap feature. It should be noted that the protocol specifying that the feature combination corresponding to the random access resource includes the eRedCap feature and the RedCap feature may also be described as the protocol specifying that the network allows the feature combination corresponding to a RACH resource set to include both the eRedCap feature and the RedCap feature.

In some embodiments, the terminal expects to be configured with the second random access resource, and the network device may configure the second random access resource for the terminal.

In some embodiments, the feature supported by the terminal includes the eRedCap feature, or the feature supported by the terminal includes the eRedCap feature and the RedCap feature; when the terminal is configured with the second random access resource, the second random access resource is available.

In some embodiments, when the feature supported by the terminal includes at least the eRedCap feature, since the second random access resource is allowed to be configured, the network device may configure the second random access resource for the terminal. Then, when the terminal is configured with the second random access resource, the terminal may determine that the second random access resource is available, and further perform random access on the second random access resource.

In some embodiments, since the second random access resource is associated with the eRedCap feature and the RedCap feature, the network device may determine that the terminal supports the eRedCap feature and the RedCap feature according to the second random access resource used by the terminal for random access.

It should be noted that since the data transmission bandwidth of the first terminal is smaller than that of the third terminal, the first terminal may support using the third random access resource associated with the eRedCap feature, the second random access resource associated with the eRedCap feature and the RedCap feature, and the fourth random access resource associated with the RedCap feature. Similarly, since the second terminal supports both the eRedCap feature and the RedCap feature, the second terminal may support using the third random access resource associated with the eRedCap feature and the second random access resource associated with the eRedCap feature and the RedCap feature. Compared with the third terminal, the first terminal and the second terminal have better compatibility in selecting random access resources.

In some embodiments, the feature supported by the terminal includes the RedCap feature. When the terminal is configured with the second random access resource, the second random access resource is unavailable.

In some embodiments, when the first random access resource includes the second random access resource, the first random access resource is configured to indicate to the network device in random access that the feature supported by the terminal includes at least the eRedCap feature.

In some embodiments, the feature supported by the terminal includes the RedCap feature, and when the terminal is configured with the second random access resource, the second random access resource is unavailable. In addition, the feature supported by the terminal includes the eRedCap feature or includes the eRedCap feature and the RedCap feature, and when the terminal is configured with the second random access resource, the second random access resource is available.

When the feature supported by the terminal includes the eRedCap feature, since the second random access resource is allowed to be configured, the network device may configure the second random access resource for the terminal. Then, when the eRedCap terminal is configured with the second random access resource, the eRedCap terminal may determine that the second random access resource is available, and further perform random access on the second random access resource.

However, a terminal supporting the RedCap feature cannot use the second random access resource for random access. Therefore, only terminals supporting the eRedCap feature among the features associated with the second random access resource can use the second random access resource. Therefore, in some embodiments, the network device can determine that the terminal supports the eRedCap feature, or both the eRedCap feature and the RedCap feature, that is, determine that the terminal supports at least the eRedCap feature, according to the second random access resource used by the terminal for random access.

Optionally, the network device determines, according to the first random access resource including the second random access resource, that the feature supported by the terminal includes at least the eRedCap feature.

In the above embodiment, when the terminal is allowed to be configured with the second random access resource and is configured with the second random access resource, the first terminal or the second terminal can determine that the second random access resource is available, and the third terminal can determine that the second random access resource is unavailable. Therefore, the network device can determine that the feature supported by the terminal includes at least the eRedCap feature according to the first random access resource including the second random access resource. Therefore, by performing random access on the second random access resource, the terminal can implicitly perform early indication, thereby saving signaling overhead.

In a further embodiment, the terminal is allowed to be configured with the second random access resource, and the terminal is not allowed to be configured with the second random access resource and the third random access resource.

For example, the protocol specifies that the feature combination corresponding to the random access resource includes the eRedCap feature and the RedCap feature, and the terminal may be allowed to be configured with the second random access resource supporting the eRedCap feature and the RedCap feature; in addition, the protocol specifies that the feature combination corresponding to the random access resource cannot include both the combination of the eRedCap feature and the RedCap feature and the standalone eRedCap feature, and the terminal may not be allowed to be configured with the second random access resource and the third random access resource. It should be noted that the protocol specifying that the feature combination corresponding to the random access resource includes the eRedCap feature and the RedCap feature, and the protocol specifying that the feature combination corresponding to the random access resource cannot include both the combination of the eRedCap feature and the RedCap feature and the standalone eRedCap feature may also be described as the protocol specifying that the feature combination corresponding to the random access resource includes the eRedCap feature and the RedCap feature, or the protocol specifying that the network allows the feature combination corresponding to a RACH resource set to include both the eRedCap feature and the RedCap feature, but does not allow the simultaneous configuration of the feature combination corresponding to other RACH resource sets that includes the eRedCap feature but not include the RedCap feature.

In some embodiments, the feature supported by the terminal includes the eRedCap feature, or the feature supported by the terminal includes the eRedCap feature and the RedCap feature; determining the first random access resource for random access includes any one of the following.

1-1: determining that the first random access resource includes the second random access resource, where the terminal is configured with the second random access resource.

In a possible implementation, the first terminal is allowed to be configured with the second random access resource and not allowed to be configured with the second random access resource and the third random access resource. When the first terminal is configured with the second random access resource, the first terminal does not expect to be configured with the third random access resource, and the first terminal may determine that the second random access resource is available and determine that the first random access resource includes the second random access resource.

It should be noted that the following embodiments mainly exemplarily describe 1-1, 1-2, and 1-3 of the present disclosure when the terminal is a first terminal supporting the eRedCap feature, and in the embodiments involving the first terminal, the first terminal may also be replaced with the second terminal.

In a possible implementation, the first terminal is allowed to be configured with the second random access resource and not allowed to be configured with the second random access resource and the third random access resource. When the first terminal is configured with the second random access resource and the fourth random access resource, the first terminal may determine that the first random access resource includes the second random access resource.

In a possible implementation, the first terminal is allowed to be configured with the second random access resource and not allowed to be configured with the second random access resource and the third random access resource. When the first terminal is configured with the second random access resource and not configured with the fourth random access resource, the first terminal may determine that the first random access resource includes the second random access resource.

In the above embodiment, compared with the fourth random access resource, when the first terminal or the second terminal is configured with the second random access resource, the first terminal or the second terminal may preferentially select the second random access resource, thereby reducing the terminal bandwidth.

1-2: determining that the first random access resource includes the fourth random access resource, where the terminal is not configured with the second random access resource and the third random access resource, and is configured with the fourth random access resource.

In a possible implementation, the first terminal is allowed to be configured with the second random access resource and not allowed to be configured with the second random access resource and the third random access resource. When the first terminal is not configured with the second random access resource and the third random access resource and is configured with the fourth random access resource, the first terminal may determine that the fourth random access resource is available and determine that the first random access resource includes the fourth random access resource.

In the above embodiment, when the first terminal or the second terminal is neither configured with the second random access resource nor the third random access resource, the first terminal or the second terminal may select the fourth random access resource, that is, downward compatibility, thereby ensuring the reliability of random access.

1-3: determining that the first random access resource includes the third random access resource, where the terminal is not configured with the second random access resource and is configured with the third random access resource.

In a possible implementation, the first terminal is allowed to be configured with the second random access resource and not allowed to be configured with the second random access resource and the third random access resource. When the first terminal is not configured with the second random access resource and the fourth random access resource and is configured with the third random access resource, it is determined that the first random access resource includes the third random access resource.

In a possible implementation, the first terminal is allowed to be configured with the second random access resource and not allowed to be configured with the second random access resource and the third random access resource. When the first terminal is not configured with the second random access resource and is configured with the third random access resource and the fourth random access resource, it is determined that the first random access resource includes the third random access resource.

In the above embodiment, compared with the fourth random access resource, when the first terminal or the second terminal is configured with the third random access resource, the first terminal or the second terminal may preferentially select the third random access resource, thereby reducing the terminal bandwidth.

In some embodiments, the feature supported by the terminal includes the RedCap feature. Determining the first random access resource for random access includes the following.

1-4: determining that the second random access resource is unavailable, where the terminal is configured with the second random access resource.

In a possible implementation, the third terminal is allowed to be configured with the second random access resource and not allowed to be configured with the second random access resource and the third random access resource. When the third terminal is configured with the second random access resource and the fourth random access resource, the third terminal does not expect to be configured with the third random access resource, and the third terminal may determine that the second random access resource is unavailable and determine that the first random access resource includes the fourth random access resource.

1-5: determining that the third random access resource is unavailable, where the terminal is configured with the third random access resource.

In a possible implementation, the third terminal is allowed to be configured with the second random access resource and not allowed to be configured with the second random access resource and the third random access resource. When the third terminal is configured with the third random access resource and the fourth random access resource, the third terminal does not expect to be configured with the second random access resource, and the third terminal may determine that the third random access resource is unavailable and determine that the first random access resource includes the fourth random access resource.

In a further embodiment, the terminal is allowed to be configured with the second random access resource, and the terminal is allowed to be configured with the second random access resource and the third random access resource. For example, the protocol specifies that the feature combination corresponding to the random access resource includes the eRedCap feature and the RedCap feature, and the terminal may be allowed to be configured with the second random access resource supporting the eRedCap feature and the RedCap feature; in addition, the protocol specifies that the feature combination corresponding to the random access resource may include not only the combination of the eRedCap feature and the RedCap feature but also the standalone eRedCap feature, and the terminal may be allowed to be configured with the second random access resource and the third random access resource.

In some embodiments, the feature supported by the terminal includes the eRedCap feature. Determining the first random access resource for random access includes any one of the following.

2-1: determining that the first random access resource includes the third random access resource, where the terminal is configured with the second random access resource and the third random access resource.

In a possible implementation, the first terminal is allowed to be configured with the second random access resource and allowed to be configured with the second random access resource and the third random access resource. When the first terminal is configured with the second random access resource and the third random access resource, the first terminal may determine that the first random access resource includes the third random access resource. Optionally, the first terminal may also determine that the second random access resource is unavailable.

In the above embodiment, compared with the second random access resource, when the first terminal is configured with the third random access resource, the first terminal may preferentially select the third random access resource, thereby reducing the terminal bandwidth.

2-2: determining that the first random access resource includes the second random access resource, where the terminal is configured with the second random access resource and is not configured with the third random access resource.

In a possible implementation, the first terminal is allowed to be configured with the second random access resource and allowed to be configured with the second random access resource and the third random access resource. When the first terminal is not configured with the third random access resource and is configured with the second random access resource and the fourth random access resource, the first terminal may determine that the first random access resource includes the second random access resource.

In the above embodiment, compared with the fourth random access resource, when the first terminal is not configured with the third random access resource and is configured with the second random access resource, the first terminal may preferentially select the second random access resource, thereby reducing the terminal bandwidth.

2-3: determining that the first random access resource includes the third random access resource, where the terminal is configured with the third random access resource and is not configured with the second random access resource.

In a possible implementation, the first terminal is allowed to be configured with the second random access resource and allowed to be configured with the second random access resource and the third random access resource. When the first terminal is not configured with the second random access resource and is configured with the third random access resource and the fourth random access resource, the first terminal may determine that the first random access resource includes the third random access resource.

In the above embodiment, compared with the fourth random access resource, when the first terminal is not configured with the second random access resource and is configured with the third random access resource, the first terminal may preferentially select the third random access resource, thereby reducing the terminal bandwidth.

In some embodiments, the feature supported by the terminal includes the eRedCap feature and the RedCap feature. Determining the first random access resource for random access includes any one of the following.

2-4: determining that the first random access resource includes the second random access resource, where the terminal is configured with the second random access resource.

In a possible implementation, the second terminal is allowed to be configured with the second random access resource and allowed to be configured with the second random access resource and the third random access resource. When the second terminal is configured with the second random access resource and the third random access resource, the second terminal may determine that the first random access resource includes the second random access resource.

In a possible implementation, the second terminal is allowed to be configured with the second random access resource and allowed to be configured with the second random access resource and the third random access resource. When the second terminal is configured with the second random access resource and the fourth random access resource, the second terminal may determine that the first random access resource includes the second random access resource.

In the above embodiment, compared with the third random access resource or the fourth random access resource, when the second terminal is configured with the second random access resource, the second terminal may preferentially select the second random access resource.

2-5: determining, by the terminal, that the first random access resource includes the third random access resource or the fourth random access resource, where the terminal is not configured with the second random access resource and is configured with at least one of the third random access resource and the fourth random access resource.

In a possible implementation, the second terminal is allowed to be configured with the second random access resource and allowed to be configured with the second random access resource and the third random access resource. When the second terminal is not configured with the second random access resource and the fourth random access resource and is configured with the third random access resource, the second terminal may determine that the first random access resource includes the third random access resource.

In a possible implementation, the second terminal is allowed to be configured with the second random access resource and allowed to be configured with the second random access resource and the third random access resource. When the second terminal is not configured with the second random access resource and the third random access resource and is configured with the fourth random access resource, the second terminal may determine that the first random access resource includes the fourth random access resource.

In a possible implementation, the second terminal is allowed to be configured with the second random access resource and allowed to be configured with the second random access resource and the third random access resource. When the second terminal is not configured with the second random access resource and is configured with the third random access resource and the fourth random access resource, the second terminal may determine that the first random access resource includes the third random access resource or the fourth random access resource according to the configured priority information. Optionally, in the above implementation, when the second terminal determines that the first random access resource includes the third random access resource, the second terminal may also determine that the fourth random access resource is unavailable. When the second terminal determines that the first random access resource includes the fourth random access resource, the second terminal may also determine that the third random access resource is unavailable.

In some embodiments, the feature supported by the terminal includes the RedCap feature. Determining the first random access resource for random access includes any one of the following.

2-6: determining that the second random access resource is unavailable, where the terminal is configured with the second random access resource.

In a possible implementation, the third terminal is allowed to be configured with the second random access resource and allowed to be configured with the second random access resource and the third random access resource. When the third terminal is configured with the second random access resource and the fourth random access resource, the third terminal may determine that the second random access resource is unavailable, ignore the second random access resource, and determine that the first random access resource includes the fourth random access resource.

2-7: determining that both the second random access resource and the third random access resource are unavailable, where the terminal is configured with the second random access resource and the third random access resource.

In a possible implementation, the third terminal is allowed to be configured with the second random access resource and allowed to be configured with the second random access resource and the third random access resource. When the third terminal is configured with the second random access resource, the third random access resource, and the fourth random access resource, the third terminal may determine that both the second random access resource and the third random access resource are unavailable and determine that the first random access resource includes the fourth random access resource.

In some embodiments, the terminal is not allowed to be configured with the second random access resource; the terminal does not expect to be configured with the second random access resource; the network device does not expect to configure the second random access resource for the terminal. For example, the protocol specifies that the feature combination corresponding to the random access resource cannot include the eRedCap feature and the RedCap feature, and the terminal may not be allowed to be configured with the second random access resource supporting the eRedCap feature and the RedCap feature.

In some embodiments, the feature supported by the terminal includes the eRedCap feature. Determining the first random access resource for random access includes any one of the following.

3-1: determining that the first random access resource includes the third random access resource, where the terminal is configured with the third random access resource.

In a possible implementation, the first terminal is not allowed to be configured with the second random access resource. When the first terminal is configured with the third random access resource and the fourth random access resource, the first terminal may determine that the first random access resource includes the third random access resource.

In the above embodiment, compared with the fourth random access resource, when the first terminal is configured with the third random access resource, the first terminal may preferentially select the third random access resource, thereby reducing the terminal bandwidth.

3-2: determining that the first random access resource includes the fourth random access resource, where the terminal is not configured with the third random access resource and is configured with the fourth random access resource.

In a possible implementation, the first terminal is not allowed to be configured with the second random access resource. When the first terminal is not configured with the third random access resource and is configured with the fourth random access resource, the first terminal may determine that the first random access resource includes the fourth random access resource.

In the above embodiment, when the first terminal is neither configured with the second random access resource nor the third random access resource, the first terminal may select the fourth random access resource, that is, downward compatibility, thereby ensuring the reliability of random access.

In some embodiments, the feature supported by the terminal includes the eRedCap feature and the RedCap feature. Determining the first random access resource for random access includes any one of the following.

3-3: determining, by the terminal, that the first random access resource includes the third random access resource or the fourth random access resource, where the terminal is configured with the third random access resource and the fourth random access resource.

In a shown implementation, the second terminal is not allowed to be configured with the second random access resource. When the second terminal is configured with the third random access resource and the fourth random access resource, the second terminal may determine that the first random access resource includes the third random access resource or the fourth random access resource according to the configured priority information.

3-4: determining, by the terminal, that the first random access resource includes the third random access resource, where the terminal is configured with the third random access resource is not configured with the fourth random access resource.

In a shown implementation, the second terminal is not allowed to be configured with the second random access resource. When the second terminal is configured with the third random access resource and is not configured with the fourth random access resource, the second terminal may determine that the first random access resource includes the third random access resource.

3-5: determining, by the terminal, that the first random access resource includes the fourth random access resource, where the terminal is not configured with the third random access resource and is configured with the fourth random access resource.

In a shown implementation, the second terminal is not allowed to be configured with the second random access resource. When the second terminal is not configured with the third random access resource and is configured with the fourth random access resource, the second terminal may determine that the first random access resource includes the fourth random access resource.

In some embodiments, the method further includes:
step S303: receiving resource configuration information sent by the network device.

In some embodiments, the resource configuration information includes a Feature Combination Information Element (Information Element, IE), and the feature combination information element indicates at least one feature associated with the random access resource configured by the network device.

In a shown implementation, the feature combination information element includes any one of the following: a first field indicating that the random access resource configured by the network device is associated with the eRedCap feature; a second field indicating that the random access resource configured by the network device is associated with the RedCap feature.

When the first field is a first value, the first field indicates that the random access resource configured by the network device is associated with the eRedCap feature. When the first field is a second value, the first field indicates that the random access resource configured by the network device is not associated with the eRedCap feature.

When the second field is a first value, the second field indicates that the random access resource configured by the network device is associated with the RedCap feature. When the second field is a second value, the second field indicates that the random access resource configured by the network device is not associated with the RedCap feature.

For example, the first field may be an eRedCap-r18 field included in the feature combination information element, and the second field may be a redCap-r17 field included in the feature combination information element; the first value may be true, and the second value may be false.

In some embodiments, the method further includes:
step S304: determining, according to the feature combination information element, that the random access resource configured by the network device is associated with the eRedCap feature and the RedCap feature, and determine that the terminal is configured with the second random access resource.

In a shown implementation, according to the feature combination information element included in the resource configuration information as follows: 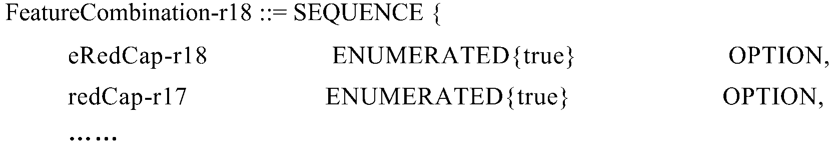 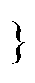 the terminal may determine that the random access resource configured by the network device is associated with the eRedCap feature and the RedCap feature, and the terminal is configured with the second random access resource.

In a shown implementation, according to the feature combination information element included in the resource configuration information as follows: 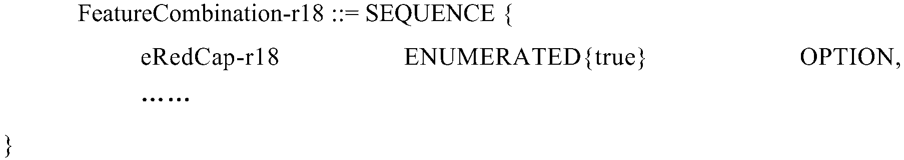 the terminal may determine that the random access resource configured by the network device is associated with the eRedCap feature, and the terminal is configured with the third random access resource.

In a shown implementation, according to the feature combination information element included in the resource configuration information as follows: 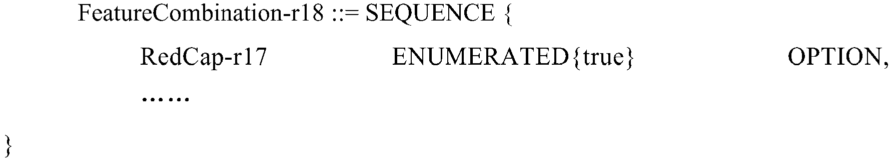 the terminal may determine that the random access resource configured by the network device is associated with the RedCap feature, and the terminal is configured with the fourth random access resource.

In the above embodiment, according to the feature combination information element included in the resource configuration information, the terminal can determine at least one feature associated with the random access resource configured by the network device. Therefore, the terminal can determine the configuration status of the second random access resource, the third random access resource, and the fourth random access resource, and further reasonably select the random access resource according to the feature supported by the terminal and the configuration status of various random access resources, thereby ensuring that the terminal can perform random access and improving the flexibility of random access resource configuration and random access resource selection.

It should be noted that the second random access resource being associated with the eRedCap feature and the RedCap feature may also be described as the feature combination corresponding to the second random access resource including both the eRedCap feature and the RedCap feature. The third random access resource being associated with the eRedCap feature may also be described as the feature combination corresponding to the third random access resource including the eRedCap feature. The fourth random access resource being associated with the RedCap feature may also be described as the feature combination corresponding to the fourth random access resource including the RedCap feature. Therefore, in the embodiments involved in the present disclosure, "the network device configures the second random access resource for the terminal" is a different scenario from "the network device configures the third random access resource and the fourth random access resource for the terminal".

In some embodiments, if a random access resource set is configured for the eRedCap feature or a terminal supporting the eRedCap feature (such as an eRedCap terminal), the random access resource set is unavailable for a random access procedure that does not apply the eRedCap feature.

In some embodiments, a random access resource set is configured for the RedCap feature. If the terminal is an eRedCap terminal and no random access resource set is configured for the eRedCap feature, it is determined that the random access resource set is unavailable for random access performed by non-eRedCap terminals or for random access that does not involve the eRedCap feature; if the terminal is a RedCap terminal, or the terminal is an eRedCap terminal and any random access resource set is configured for the eRedCap feature, it is determined that the random access resource set is unavailable for random access performed by non-RedCap terminals or for random access that does not involve the RedCap feature.

In the second aspect, embodiments of the present disclosure provide a random access method. FIG. 4 is a schematic flowchart of another random access method according to an embodiment of the present disclosure. The random access method shown in this embodiment may be performed by a network device.

As shown in FIG. 4, the random access method may include the following steps:
step S401: performing random access with a terminal on a first random access resource for random access.

For example, the terminal is an eRedCap terminal, and the feature supported by the terminal may include the eRedCap feature. When the terminal is configured with the third random access resource associated with the eRedCap feature, the terminal may determine the third random access resource as an available random access resource, and further determine that the first random access resource includes the third random access resource. The network device may perform random access with the terminal on the first random access resource.

For example, the terminal is a RedCap terminal, and the feature supported by the terminal may include the RedCap feature. When the terminal is configured with the fourth random access resource associated with the RedCap feature, the terminal may determine the fourth random access resource as an available random access resource, and further determine that the first random access resource includes the fourth random access resource. The network device may perform random access with the terminal on the first random access resource.

It should be noted that the embodiment shown in FIG. 4 may be implemented independently or in combination with at least one other embodiment of the present disclosure, which may be selected according to needs and is not limited in the present disclosure.

In some embodiments, the first random access resource may be determined based on the feature supported by the terminal and the configuration status of the second random access resource. The second random access resource may be associated with the eRedCap feature and the RedCap feature.

In some embodiments, the feature supported by the terminal includes at least one of the following: eRedCap feature; or RedCap feature. For example, the terminal may be a first terminal supporting the eRedCap feature, or a second terminal supporting both the eRedCap feature and the RedCap feature, or a third terminal supporting the RedCap feature.

In the embodiments shown in the present disclosure, a terminal that supports neither the eRedCap feature nor the RedCap feature is referred to as a fourth terminal. For example, the fourth terminal may specifically be an eMBB terminal or a legacy terminal.

Optionally, the terminal may determine the first random access resource for random access and perform random access on the first random access resource. Where, the first random access resource may be determined by the terminal from the random access resources configured by the network device for the terminal based on the feature supported by the terminal. In some possible implementations, the first random access resource may be determined based on the feature supported by the terminal and the configuration status of the second random access resource, and the second random access resource is associated with the eRedCap feature and the RedCap feature. In the above embodiment, in a scenario where the network device may configure the second random access resource associated with the eRedCap feature and the RedCap feature for the terminal, when the terminal determines the first random access resource for random access, in addition to considering the feature supported by the terminal, the terminal may also need to consider the configuration status of the second random access resource.

In some embodiments, the random access may include 4-step random access. The performing random access with the terminal on the first random access resource may include: receiving msg1 and/or msg3 sent by the terminal on the first random access resource. The msg1 or msg3 sent on the first random access resource may be configured for early indication based on the terminal.

According to the embodiments of the present disclosure, the network device can perform random access with the terminal on the first random access resource, where the first random access resource is determined based on the feature supported by the terminal and the configuration status of the second random access resource. Therefore, in a scenario where the network device may configure a random access resource associated with the eRedCap feature and the RedCap feature, the terminal can determine the first random access resource for random access based on whether the second random access resource is configured and the feature supported by the terminal, thereby ensuring that the terminal can perform random access and avoiding communication problems caused by the terminal being unable to determine the first random access resource for random access when the second random access resource is introduced.

In some embodiments, the method further includes:
step S402: configuring random access resources for the terminal.

In some embodiments, the first random access resource is determined from the random access resources configured by the network device for the terminal.

In some embodiments, the random access resources configured by the network device may include at least one of the following: a second random access resource associated with the eRedCap feature and the RedCap feature; a third random access resource associated with the eRedCap feature; or a fourth random access resource associated with the RedCap feature.

In some embodiments, the random access resources configured by the network device may further include other random access resources not associated with the eRedCap feature and/or the RedCap feature, which is not specifically limited herein. For example, the network device may configure a random access resource not associated with the eRedCap feature and/or the RedCap feature for the fourth terminal.

In some embodiments, the network device determines that it is allowed to configure the second random access resource. For example, the protocol specifies that the feature combination corresponding to the random access resource includes the eRedCap feature and the RedCap feature, and the network device may determine that it is allowed to configure the second random access resource supporting the eRedCap feature and the RedCap feature.

In some embodiments, the terminal expects to be configured with the second random access resource, and the network device may configure the second random access resource for the terminal.

In some embodiments, the feature supported by the terminal may include the eRedCap feature, or the feature supported by the terminal may include the eRedCap feature and the RedCap feature; when the network device configures the second random access resource for the terminal, the terminal may determine that the second random access resource is available.

In some embodiments, when the feature supported by the terminal includes at least the eRedCap feature, since the second random access resource is allowed to be configured, the network device may configure the second random access resource for the terminal. Then, when the terminal is configured with the second random access resource, the terminal may determine that the second random access resource is available, and further perform random access on the second random access resource.

In some embodiments, the feature supported by the terminal includes the RedCap feature. When the terminal is configured with the second random access resource, the second random access resource is unavailable.

In some embodiments, when the first random access resource includes the second random access resource, the first random access resource is configured to indicate to the network device in random access that the feature supported by the terminal includes at least the eRedCap feature. For example, according to the first random access resource including the second random access resource, the network device may determine that the terminal supports the eRedCap feature, or determine that the terminal supports both the eRedCap feature and the RedCap feature.

In some embodiments, the feature supported by the terminal includes the RedCap feature, and when the terminal is configured with the second random access resource, the second random access resource is unavailable. In addition, the feature supported by the terminal includes the eRedCap feature or includes the eRedCap feature and the RedCap feature, and when the terminal is configured with the second random access resource, the second random access resource is available.

When the feature supported by the terminal includes the eRedCap feature, since the second random access resource is allowed to be configured, the network device may configure the second random access resource for the terminal. Then, when the eRedCap terminal is configured with the second random access resource, the eRedCap terminal may determine that the second random access resource is available, and further perform random access on the second random access resource.

However, a terminal supporting the RedCap feature cannot use the second random access resource for random access. Therefore, only terminals supporting the eRedCap feature among the features associated with the second random access resource can use the second random access resource. Therefore, in some embodiments, the network device may determine that the terminal supports the eRedCap feature, or both the eRedCap feature and the RedCap feature, that is, determine that the terminal supports at least the eRedCap feature, according to the second random access resource used by the terminal for random access.

In the above embodiment, when the terminal is allowed to be configured with the second random access resource and is configured with the second random access resource, the first terminal or the second terminal may determine that the second random access resource is available, and the third terminal may determine that the second random access resource is unavailable. Therefore, according to the first random access resource including the second random access resource, the network device may determine that the feature supported by the terminal includes at least the eRedCap feature. Therefore, by performing random access on the second random access resource, the terminal can implicitly perform early indication, thereby saving signaling overhead.

In some embodiments, the network device determines that it is allowed to configure the second random access resource, and the network device determines that it is not allowed to configure the second random access resource and the third random access resource, where the third random access resource is associated with the eRedCap feature. For example, the protocol specifies that the feature combination corresponding to the random access resource includes the eRedCap feature and the RedCap feature, and the network device may determine that it is allowed to configure the second random access resource supporting the eRedCap feature and the RedCap feature; in addition, the protocol specifies that the feature combination corresponding to the random access resource cannot include both the combination of the eRedCap feature and the RedCap feature and the standalone eRedCap feature, and the network device may determine that it is not allowed to configure the second random access resource and the third random access resource.

In some embodiments, the network device expects to configure the second random access resource for the terminal and not configure the third random access resource for the terminal, or the network device expects to not configure the second random access resource for the terminal and to configure the third random access resource for the terminal.

In a possible implementation, the network device determines that it is allowed to configure the second random access resource, and the network device determines that it is not allowed to configure the second random access resource and the third random access resource. The network device configures the second random access resource for the terminal and does not configure the third random access resource for the terminal.

In a possible implementation, the network device determines that it is allowed to configure the second random access resource, and the network device determines that it is not allowed to configure the second random access resource and the third random access resource. The network device does not configure the second random access resource for the terminal and configures the third random access resource for the terminal.

In a possible implementation, the network device determines that it is allowed to configure the second random access resource, and the network device determines that it is not allowed to configure the second random access resource and the third random access resource. The network device does not configure the second random access resource and the third random access resource for the terminal.

In some embodiments, the network device determines that it is allowed to configure the second random access resource, and the network device determines that it is allowed to configure the second random access resource and the third random access resource. For example, the protocol specifies that the feature combination corresponding to the random access resource includes the eRedCap feature and the RedCap feature, and the network device may determine that it is allowed to configure the second random access resource supporting the eRedCap feature and the RedCap feature; in addition, the protocol specifies that the feature combination corresponding to the random access resource may include not only the combination of the eRedCap feature and the RedCap feature but also the standalone eRedCap feature, and the network device may determine that it is allowed to configure the second random access resource and the third random access resource.

In some embodiments, the network device expects to configure the second random access resource, the third random access resource, or both the second random access resource and the third random access resource for the terminal.

In a possible implementation, the network device determines that it is allowed to configure the second random access resource, and the network device determines that it is allowed to configure the second random access resource and the third random access resource. The network device configures the second random access resource and the third random access resource for the terminal.

In a possible implementation, the network device determines that it is allowed to configure the second random access resource, and the network device determines that it is allowed to configure the second random access resource and the third random access resource. The network device configures the second random access resource for the terminal and does not configure the third random access resource for the terminal.

In a possible implementation, the network device determines that it is allowed to configure the second random access resource, and the network device determines that it is allowed to configure the second random access resource and the third random access resource. The network device does not configure the second random access resource for the terminal and configures the third random access resource for the terminal.

In a possible implementation, the network device determines that it is allowed to configure the second random access resource, and the network device determines that it is allowed to configure the second random access resource and the third random access resource. The network device does not configure the second random access resource and the third random access resource for the terminal.

In some embodiments, the network device determines that it is not allowed to configure the second random access resource. For example, the protocol specifies that the feature combination corresponding to the random access resource cannot include the combination of the eRedCap feature and the RedCap feature, and the network device may determine that it is not allowed to configure the second random access resource supporting the eRedCap feature and the RedCap feature.

In some embodiments, the network device does not expect to configure the second random access resource for the terminal.

In a possible implementation, the network device determines that it is not allowed to configure the second random access resource. The network device does not configure the second random access resource for the terminal and configures the third random access resource for the terminal.

In a possible implementation, the network device determines that it is not allowed to configure the second random access resource. The network device does not configure the second random access resource and the third random access resource for the terminal.

In some embodiments, configuring the random access resources for the terminal includes: determining a random access resource to be configured for the terminal; and sending resource configuration information to the terminal, where the resource configuration information includes a feature combination information element, and the feature combination information element indicates at least one kind of feature associated with the random access resource configured by the network device.

In some embodiments, the resource configuration information includes a Feature Combination Information Element (Information Element, IE), and the feature combination information element indicates at least one kind of feature associated with the random access resource configured by the network device.

In a shown implementation, the feature combination information element includes any one of the following: a first field indicating that the random access resource configured by the network device is associated with the eRedCap feature; a second field indicating that the random access resource configured by the network device is associated with the RedCap feature.

When the first field is a first value, the first field indicates that the random access resource configured by the network device is associated with the eRedCap feature. When the first field is a second value, the first field indicates that the random access resource configured by the network device is not associated with the eRedCap feature.

When the second field is a first value, the second field indicates that the random access resource configured by the network device is associated with the RedCap feature. When the second field is a second value, the second field indicates that the random access resource configured by the network device is not associated with the RedCap feature.

For example, the first field may be an eRedCap-r18 field included in the feature combination information element, and the second field may be a redCap-r17 field included in the feature combination information element; the first value may be true, and the second value may be false.

In a shown implementation, if the network device determines to configure the second random access resource for the terminal, the network device may send resource configuration information to the terminal. The feature combination information element included in the resource configuration information is as follows:

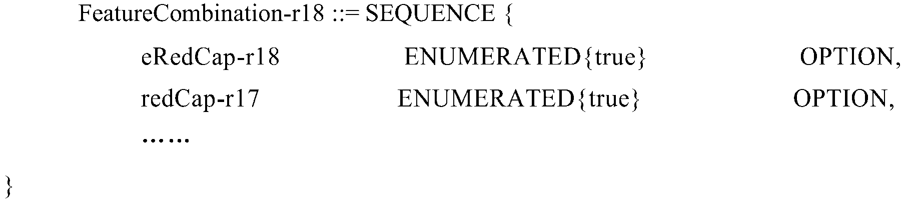

The feature combination information element indicates to the terminal that the network device configures the second random access resource associated with the eRedCap feature and the RedCap feature.

In a shown implementation, if the network device determines to configure the third random access resource for the terminal, the network device may send resource configuration information to the terminal. The feature combination information element included in the resource configuration information is as follows:

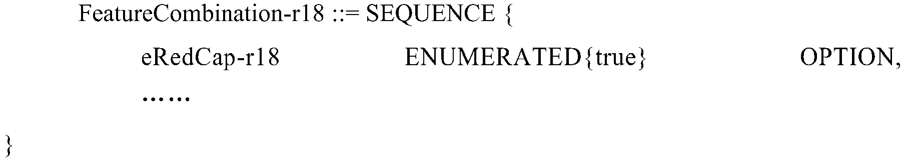

The feature combination information element indicates to the terminal that the network device configures the third random access resource associated with the eRedCap feature.

In a shown implementation, if the network device determines to configure the fourth random access resource for the terminal, the network device may send resource configuration information to the terminal. The feature combination information element included in the resource configuration information is as follows:

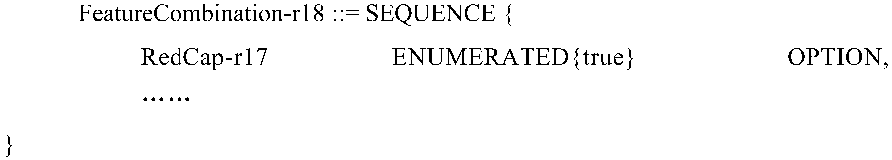

The feature combination information element indicates to the terminal that the network device configures the fourth random access resource associated with the RedCap feature.

In some embodiments, the method further includes:
step S403: determining, according to the first random access resource including the second random access resource, that the feature supported by the terminal includes at least the eRedCap feature.

In some embodiments, the network device determines that it is allowed to configure the second random access resource for the terminal, and the network device configures the second random access resource for the terminal. Since the feature supported by the terminal includes the eRedCap feature, or the feature supported by the terminal includes the eRedCap feature and the RedCap feature, when the terminal is configured with the second random access resource, the second random access resource is available. In addition, the feature supported by the terminal includes the RedCap feature, and when the terminal is configured with the second random access resource, the second random access resource is unavailable. Therefore, in some embodiments, according to the second random access resource used by the terminal for random access, the network device may determine that the terminal supports the eRedCap feature, or both the eRedCap feature and the RedCap feature, that is, determine that the terminal supports at least the eRedCap feature.

In some embodiments, the names of information and the like are not limited to the names recorded in the embodiments. Terms such as "information", "message", "signal", "signaling", "report", "configuration", "indication", "instruction", "command", "channel", "parameter", "domain", "field", "symbol", "codebook", "codeword", "codepoint", "bit", "data", "program", and "chip" may be used interchangeably.

In some embodiments, terms such as "moment", "time point", "time", and "time position" may be used interchangeably; terms such as "duration", "time period", "time window", "window", and "time" may be used interchangeably.

In some embodiments, terms such as "component carrier (CC)", "cell", "frequency carrier", and "carrier frequency" may be used interchangeably.

In some embodiments, terms such as "acquire", "obtain", "get", "receive", "transmit", "bidirectionally transmit", and "send and/or receive" may be used interchangeably, which may be interpreted as various meanings including receiving from another entity, obtaining from a protocol, obtaining from a higher layer, obtaining through self-processing, implementing independently, and the like.

In some embodiments, terms such as "sending", "transmitting", "reporting", "delivering", "transmission", "bidirectional transmission", and "sending and/or receiving" may be used interchangeably.

Corresponding to the foregoing embodiments of the random access method, the present disclosure further provides embodiments of a terminal and a network device.

Embodiments of the present disclosure further provide a terminal, including: one or more processors; where the terminal is configured to perform the random access method of the first aspect and optional embodiments of the first aspect.

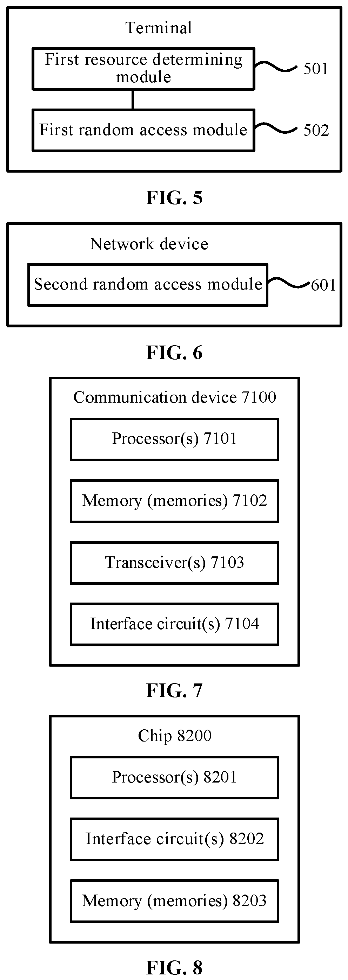

FIG. 5 is a schematic block diagram of a terminal according to an embodiment of the present disclosure. As shown in FIG. 5, the terminal includes a first resource determination module 501 and a first random access module 502.

In some embodiments, the first resource determination module is configured to determine a first random access resource for random access, where the first random access resource is determined based on a feature supported by the terminal and a configuration status of a second random access resource, and the second random access resource is associated with an eRedCap feature and a RedCap feature; and
the first random access module is configured to perform random access on the first random access resource.

In some embodiments, the feature supported by the terminal includes at least one of the following:
eRedCap feature;
RedCap feature.

In some embodiments, the feature supported by the terminal includes the eRedCap feature, or the feature supported by the terminal includes the eRedCap feature and the RedCap feature. When the terminal is configured with the second random access resource, the second random access resource is available.

In some embodiments, the feature supported by the terminal includes the RedCap feature. When the terminal is configured with the second random access resource, the second random access resource is unavailable.

In some embodiments, the terminal is allowed to be configured with the second random access resource.

In some embodiments, the feature supported by the terminal includes the eRedCap feature, or the feature supported by the terminal includes the eRedCap feature and the RedCap feature;
the resource determination module is configured to perform any one of the following:
determining that the first random access resource includes the second random access resource, where the terminal is configured with the second random access resource;
determining that the first random access resource includes a fourth random access resource, where the terminal is not configured with the second random access resource and a third random access resource, and is configured with the fourth random access resource, and where the third random access resource is associated with the eRedCap feature, and the fourth random access resource is associated with the RedCap feature.

In some embodiments, the feature supported by the terminal includes the RedCap feature. The resource determination module is configured to:
determine that the second random access resource is unavailable, where the terminal is configured with the second random access resource.

In some embodiments, the terminal is allowed to be configured with the second random access resource, and the terminal is not allowed to be configured with the second random access resource and the third random access resource.

In some embodiments, the feature supported by the terminal includes the eRedCap feature. The resource determination module is configured to perform any one of the following:
determining that the first random access resource includes the third random access resource, where the terminal is configured with the second random access resource and the third random access resource;
determining that the first random access resource includes the second random access resource, where the terminal is configured with the second random access resource and is not configured with the third random access resource.

In some embodiments, the feature supported by the terminal includes the eRedCap feature and the RedCap feature. The resource determination module is configured to:
determine that the first random access resource includes the second random access resource, where the terminal is configured with the second random access resource.

In some embodiments, the feature supported by the terminal includes the RedCap feature. The resource determination module is configured to perform any one of the following:
determining that the second random access resource is unavailable, where the terminal is configured with the second random access resource, or the terminal is configured with the second random access resource, the third random access resource, and the fourth random access resource;
determining that both the second random access resource and the third random access resource are unavailable, where the terminal is configured with the second random access resource and the third random access resource.

In some embodiments, the terminal is allowed to be configured with the second random access resource, and the terminal is allowed to be configured with the second random access resource and the third random access resource.

In some embodiments, the terminal is not allowed to be configured with the second random access resource; the terminal does not expect to be configured with the second random access resource.

In some embodiments, the apparatus further includes:
a receiving module, configured to receive resource configuration information sent by a network device, where the resource configuration information includes a feature combination information element, and the feature combination information element indicates at least one feature associated with a random access resource configured by the network device.

In some embodiments, the apparatus further includes:
a second resource determination module, configured to determine, according to the feature combination information element, that the random access resource configured by the network device is associated with the eRedCap feature and the RedCap feature, and determine that the terminal is configured with the second random access resource.

In some embodiments, when the first random access resource includes the second random access resource, the first random access resource is configured to indicate to the network device in random access that the feature supported by the terminal includes at least the eRedCap feature.

It should be noted that the modules included in the terminal are not limited to the modules described in the above embodiments, and may also include other modules, such as a storage module, a display module, and the like.

Embodiments of the present disclosure further provide a network device, including: one or more processors; where the network device is configured to perform the random access method of the second aspect and optional embodiments of the second aspect.

FIG. 6 is a schematic block diagram of a network device according to an embodiment of the present disclosure. As shown in FIG. 6, the network device includes a second random access module 601.

In some embodiments, the second random access module is configured to perform random access with a terminal on a first random access resource for random access; where the first random access resource is determined based on a feature supported by the terminal and a configuration status of a second random access resource; and the second random access resource is associated with an eRedCap feature and a RedCap feature.

In some embodiments, the apparatus further includes:
a resource configuration module, configured to configure random access resources for the terminal, where the first random access resource is determined from the random access resources configured by the network device for the terminal.

In some embodiments, the network device determines that it is allowed to configure the second random access resource; the network device expects to configure the second random access resource for the terminal.

In some embodiments, the network device determines that it is allowed to configure the second random access resource, and the network device determines that it is not allowed to configure the second random access resource and a third random access resource, where the third random access resource is associated with the eRedCap feature. The network device expects to configure the second random access resource for the terminal and not configure the third random access resource for the terminal, or the network device expects to not configure the second random access resource for the terminal and to configure the third random access resource for the terminal.

In some embodiments, the network device determines that it is allowed to configure the second random access resource, and the network device determines that it is allowed to configure the second random access resource and the third random access resource; the network device expects to configure the second random access resource, the third random access resource, or both the second random access resource and the third random access resource for the terminal.

In some embodiments, the network device determines that it is not allowed to configure the second random access resource; the network device does not expect to configure the second random access resource for the terminal.

In some embodiments, the resource configuration module includes:
a resource determination submodule, configured to determine a random access resource to be configured for the terminal; and
a sending submodule, configured to send resource configuration information to the terminal, where the resource configuration information includes a feature combination information element, and the feature combination information element indicates at least one feature associated with the random access resource configured by the network device.

In some embodiments, the apparatus further includes:
a feature determination module, configured to determine, according to the first random access resource including the second random access resource, that the feature supported by the terminal includes at least the eRedCap feature.

In some embodiments, the present disclosure protects a manner for a specific type of terminal (first-type terminal) to select resources in a random access procedure.

As an embodiment, the first-type terminal may be an R18 eRedcap terminal; the first-type terminal is different from the second-type terminal (R17 Redcap terminal) and also different from the third-type terminal (legacy terminal or eMBB terminal).

As an embodiment, the first-type terminal has a smaller baseband processing bandwidth than the second-type terminal.

As an embodiment, the fourth-type terminal supports both the feature of the first-type terminal and the feature of the second-type terminal.

In some embodiments, the protocol specifies that the network does not allow a RACH resource set whose corresponding feature combination includes both the first feature and the second feature.

The first feature is associated with the first-type terminal, that is, for the first-type terminal, the first feature is applicable to the random access procedure initiated by the first-type terminal. For example, the first feature is the eRedcap feature, and the first-type terminal is the eRedcap terminal.

The second feature is associated with the second-type terminal, that is, for the second-type terminal, the second feature is applicable to the random access procedure initiated by the second-type terminal. For example, the second feature is the Redcap feature, and the second-type terminal is the Redcap terminal.

In some embodiments, the protocol specifies that the network allows a RACH resource set whose corresponding feature combination includes both the first feature and the second feature.

In some embodiments, the protocol specifies that the network allows a RACH resource set whose corresponding feature combination includes both the first feature and the second feature. For the terminal, it is considered that the feature combination corresponding to a RACH resource set includes both the first feature and the second feature.

As an embodiment, if the network has configured a RACH resource separately for the first feature, the RACH resource set whose corresponding feature combination includes both the first feature and the second feature is unavailable. For example, if the network configures a random access resource associated with the eRedcap feature (referred to as R18 eRedcap resource) and a random access resource associated with the eRedcap feature and the Redcap feature (referred to as R18 eRedcap+R17 Redcap resource), only the R18 eRedcap resource will be selected as the available resource.

As an embodiment, if the network has not configured a RACH resource separately for the first feature, the RACH resource set whose corresponding feature combination includes both the first feature and the second feature is available. For example, if the network only configures the R18 eRedcap+R17 Redcap resource, the R18 eRedcap+R17 Redcap resource will be selected as the available resource.

In some embodiments, the protocol specifies that the network allows a RACH resource set whose corresponding feature combination includes both the first feature and the second feature. For the first-type terminal, if it is considered that the feature combination corresponding to a RACH resource set includes both the first feature and the second feature, whether the RACH resource set is available is handled according to the above embodiments.

In some embodiments, the protocol specifies that the network allows a RACH resource set whose corresponding feature combination includes both the first feature and the second feature. For the second-type terminal, if it is considered that the feature combination corresponding to a RACH resource set includes both the first feature and the second feature, the RACH resource set is unavailable, and the terminal will ignore the RACH resource.

In some embodiments, the protocol specifies that the network allows a RACH resource set whose corresponding feature combination includes both the first feature and the second feature. For the fourth-type terminal, if it is considered that the feature combination corresponding to a RACH resource set includes both the first feature and the second feature, the RACH resource set is treated as available.

In some embodiments, the protocol specifies that the network allows a RACH resource set whose corresponding feature combination includes both the first feature and the second feature, but does not allow simultaneous configuration with a RACH resource set whose corresponding feature combination includes the first feature but not the second feature.

As an embodiment, a 4-step RACH resource may be configured for R18 eRedcap users + R17 Redcap users, but cannot be configured simultaneously with a 4-step RACH resource for R18 eRedcap users.

In some embodiments, the MAC entity makes the following judgments on each random access resource configured for the 4-step random access type and each random access resource configured for the 2-step random access.

Judgment method 1: if a random access resource set is configured for the first feature or the first-type terminal (such as eRedcap), the random access resource set is unavailable for a random access procedure that does not apply eRedcap.

Judgment method 2: for a random access resource set configured for Redcap, proceed as follows:
step 1: if RedCap of a random access resource set is set to true, proceed to step 2. It should be noted that the RedCap here can be understood as a feature, that is, if RedCap of a certain random access resource is set to true, it indicates that the random access resource has the RedCap feature.
step 2: if the terminal is an eRedCap terminal and if eRedCap is not set to true for any other random access resource set, proceed to step 3; otherwise, proceed to step 4.
step 3: determine that the random access resource set is unavailable for random access that does not apply the eRedCap terminal or the eRedcap feature.
step 4: the random access resource is unavailable for random access that does not apply the RedCap terminal or the Redcap feature.

It should be noted that the above embodiment can also be described as:
The MAC entity shall for each set of configured Random Access resources for 4-step RA type and for each set of configured Random Access resources for 2-step RA type:
1>if eredCap is set to true for a set of Random Access resources:
   2>consider the set of Random Access resources as not available for a Random Access procedure for which eRedCap is not applicable.
1>if redCap is set to true for a set of Random Access resources:
   2>if UE is eRedcap UE and if eRedCap is not set to true for any other set of Random Access resources;
      3>consider the set of Random Access resources as not available for a Random Access procedure for which eRedCap is not applicable.
   2>else (e.g., UE is Redcap UE):
      3> consider the set of Random Access resources as not available for a Random Access procedure for which RedCap is not applicable.

For the apparatus embodiments, since they basically correspond to the method embodiments, reference may be made to the partial descriptions of the method embodiments for relevant parts. The apparatus embodiments described above are only illustrative, where the modules described as separate components may or may not be physically separated, and the components shown as modules may or may not be physical modules, that is, they may be located in one place, or may be distributed to multiple network modules. Some or all of the modules may be selected according to actual needs to achieve the purpose of the solution of the embodiment. Those of ordinary skill in the art can understand and implement the solution without creative efforts.

Embodiments of the present disclosure further provide a communication device, including: one or more processors; where the one or more processors are configured to invoke instructions to cause the communication device to perform the random access method of the first aspect, optional embodiments of the first aspect, and/or the random access method of the second aspect, optional embodiments of the second aspect.

Embodiments of the present disclosure further provide a communication system, including a terminal and a network device, where the terminal is configured to implement the random access method of the first aspect, optional embodiments of the first aspect, and the network device is configured to implement the random access method of the second aspect, optional embodiments of the second aspect.

Embodiments of the present disclosure further provide a storage medium. The storage medium stores instructions that, when run on a communication device, cause the communication device to perform the random access method of the first aspect, optional embodiments of the first aspect, and/or the random access method of the second aspect, optional embodiments of the second aspect.

Embodiments of the present disclosure further provide an apparatus for implementing any of the above methods. For example, an apparatus is provided, which includes units or modules for implementing the steps executed by the terminal in any of the above methods. For another example, another apparatus is provided, which includes units or modules for implementing the steps executed by the network device (such as an access network device, a core network function node, a core network device, etc.) in any of the above methods.

It should be understood that the division of units or modules in the above apparatus is only a logical function division. In actual implementation, all or part of the units or modules may be integrated into a single physical entity, or may be physically separated. In addition, the units or modules in the apparatus may be implemented in the form of a processor invoking software. For example, the apparatus includes a processor, the processor is connected to a memory, instructions are stored in the memory, and the processor invokes the instructions stored in the memory to implement any of the above methods or implement the functions of units or modules of the above apparatus. The processor is, for example, a general-purpose processor such as a Central Processing Unit (Central Processing Unit, CPU) or a microprocessor, and the memory is a memory inside the apparatus or a memory outside the apparatus. Alternatively, the units or modules in the apparatus may be implemented in the form of hardware circuits, and the functions of part or all of the units or modules may be implemented through the design of hardware circuits. The hardware circuits may be understood as one or more processors. For example, in an implementation, the hardware circuits are Application-Specific Integrated Circuits (Application-Specific Integrated Circuits, ASICs), and the functions of part or all of the units or modules are implemented through the design of the logical relationship of components in the circuits. In another implementation, the hardware circuits may be implemented through Programmable Logic Devices (Programmable Logic Devices, PLDs). Taking a Field-Programmable Gate Array (Field-Programmable Gate Array, FPGA) as an example, it may include a large number of logic gate circuits, and the connection relationships between the logic gate circuits are configured through configuration files, thereby implementing the functions of part or all of the units or modules. All units or modules of the above apparatus may be fully implemented in the form of a processor invoking software, fully implemented in the form of hardware circuits, or partially implemented in the form of a processor invoking software and the remaining part implemented in the form of hardware circuits.

In the embodiments of the present disclosure, a processor is a circuit with signal processing capabilities. In an implementation, the processor may be a circuit with instruction reading and running capabilities, such as a Central Processing Unit (Central Processing Unit, CPU), a microprocessor, a Graphics Processing Unit (Graphics Processing Unit, GPU) (which may be understood as a microprocessor), or a Digital Signal Processor (Digital Signal Processor, DSP). In another implementation, the processor may implement a certain function through the logical relationship of hardware circuits. The logical relationship of the above hardware circuits is fixed or reconfigurable. For example, the processor is a hardware circuit implemented by an Application-Specific Integrated Circuit (ASIC) or a Programmable Logic Device (PLD), such as an FPGA. In a reconfigurable hardware circuit, the process of the processor loading a configuration file to implement hardware circuit configuration may be understood as the process of the processor loading instructions to implement the functions of part or all of the units or modules. In addition, the processor may also be a hardware circuit designed for artificial intelligence, which may be understood as an ASIC, such as a Neural Network Processing Unit (Neural Network Processing Unit, NPU), a Tensor Processing Unit (Tensor Processing Unit, TPU), a Deep Learning Processing Unit (Deep Learning Processing Unit, DPU), etc.

FIG. 7 is a schematic structural diagram of a communication device 7100 according to an embodiment of the present disclosure. The communication device 7100 may be a network device (such as an access network device, a core network device, etc.), may be a terminal (such as a user equipment, etc.), may be a chip, a chip system, or a processor that supports the network device to implement any of the above methods, and may also be a chip, a chip system, or a processor that supports the terminal to implement any of the above methods. The communication device 7100 may be configured to implement the methods described in the above method embodiments. For details, reference can be made to the description in the above method embodiments.

As shown in FIG. 7, the communication device 7100 includes one or more processors 7101. A processor 7101 may be a general-purpose processor or a dedicated processor, such as a baseband processor or a central processing unit. The baseband processor may be configured to process communication protocols and communication data, and the central processing unit may be configured to control a communication apparatus (such as a base station, a baseband chip, a terminal device, a terminal device chip, a DU, or a CU, etc.), execute programs, and process program data. The processor(s) 7101 are configured to invoke instructions to cause the communication device 7100 to perform any of the above methods.

In some embodiments, the communication device 7100 further includes one or more memories 7102 for storing instructions. Optionally, all or part of the memories 7102 may also be located outside the communication device 7100.

In some embodiments, the communication device 7100 further includes one or more transceivers 7103. When the communication device 7100 includes one or more transceivers 7103, the communication steps such as sending and receiving in the above methods are executed by the transceivers 7103, and other steps are executed by the processor(s) 7101.

In some embodiments, a transceiver may include a receiver and a transmitter. The receiver and the transmitter may be separate or integrated. Optionally, terms such as transceiver, transceiving unit, transceiving device, and transceiving circuit may be used interchangeably; terms such as transmitter, transmitting unit, transmitting device, and transmitting circuit may be used interchangeably; terms such as receiver, receiving unit, receiving device, and receiving circuit may be used interchangeably.

Optionally, the communication device 7100 further includes one or more interface circuits 7104. An interface circuit 7104 is connected to a memory 7102. The interface circuit 7104 may be configured to receive signals from the memory 7102 or other devices, and may be configured to send signals to the memory 7102 or other devices. For example, the interface circuit 7104 may read instructions stored in the memory 7102 and send the instructions to the processor 7101.

The communication device 7100 in the above embodiment description may be a network device or a terminal, but the scope of the communication device 7100 described in the present disclosure is not limited thereto, and the structure of the communication device may not be limited by FIG. 7A. The communication device may be an independent device or a part of a larger device. For example, the communication device may be: 1) an independent Integrated Circuit (IC), a chip, a chip system, or a subsystem; 2) a set of one or more ICs, optionally, the IC set may further include a storage component for storing data and programs; 3) an ASIC, such as a Modem; 4) a module embeddable in other devices; 5) a receiver, a terminal device, an intelligent terminal device, a cellular phone, a wireless device, a handheld device, a mobile unit, a vehicle-mounted device, a network device, a cloud device, an artificial intelligence device, etc.; 6) others.

FIG. 8 is a schematic structural diagram of a chip 8200 according to an embodiment of the present disclosure. For the case where the communication device 7100 may be a chip or a chip system, reference may be made to the schematic structural diagram of the chip 8200 shown in FIG. 8, but it is not limited thereto.

The chip 8200 includes one or more processors 8201. The processor(s) 8201 are configured to invoke instructions to cause the chip 8200 to perform any of the above methods.

In some embodiments, the chip 8200 further includes one or more interface circuits 8202. An interface circuit 8202 is connected to a memory 8203. The interface circuit 8202 may be configured to receive signals from the memory 8203 or other devices, and the interface circuit 8202 may be configured to
send signals to the memory 8203 or other devices. For example, the interface circuit 8202 may read instructions stored in the memory 8203 and send the instructions to the processor 8201. Optionally, terms such as interface circuit, interface, transceiving pin, and transceiver may be used interchangeably.

In some embodiments, the chip 8200 further includes one or more memories 8203 for storing instructions. Optionally, all or part of the memories 8203 may be located outside the chip 8200.

The present disclosure further provides a storage medium. The storage medium stores instructions that, when run on the communication device 7100, cause the communication device 7100 to perform any of the above methods. Optionally, the above storage medium is an electronic storage medium. Optionally, the above storage medium is a computer-readable storage medium, but it is not limited thereto, and the storage medium may also be a storage medium readable by other devices. Optionally, the above storage medium may be a non-transitory storage medium, but it is not limited thereto, and the storage medium may also be a transitory storage medium.

The present disclosure further provides a program product. When the program product is executed by the communication device 7100, the communication device 7100 is caused to perform any of the above methods. Optionally, the above program product is a computer program product.

The present disclosure further provides a computer program. When the computer program runs on a computer, the computer is caused to perform any of the above methods.

## Claims

1. A random access method, performed by a terminal, the method comprising:
determining a first random access resource for random access, wherein the first random access resource is determined based on a feature supported by the terminal and a configuration status of a second random access resource, and the second random access resource is associated with an enhanced reduced capability eRedCap feature and a reduced capability RedCap feature; and
performing random access on the first random access resource.

2. The method according to claim 1, wherein the feature supported by the terminal comprises at least one of:
eRedCap feature; or
RedCap feature.

3. The method according to claim 2, wherein the feature supported by the terminal comprises the eRedCap feature, or the feature supported by the terminal comprises the eRedCap feature and the RedCap feature, and wherein the method comprises: in response to determining that the terminal is configured with the second random access resource, determining that the second random access resource is available.

4. The method according to claim 2, wherein the feature supported by the terminal comprises the RedCap feature, and the method comprises: in response to determining that the terminal is configured with the second random access resource, determining that the second random access resource is unavailable.

5. The method according to claim 3 or 4, wherein the terminal is allowed to be configured with the second random access resource.

6. The method according to claim 3, wherein the feature supported by the terminal comprises the eRedCap feature, or the feature supported by the terminal comprises the eRedCap feature and the RedCap feature; and wherein determining the first random access resource for the random access comprises any one of:
determining that the first random access resource comprises the second random access resource, wherein the terminal is configured with the second random access resource;
determining that the first random access resource comprises a fourth random access resource, wherein the terminal is not configured with the second random access resource and a third random access resource and is configured with the fourth random access resource, and wherein the third random access resource is associated with the eRedCap feature, and the fourth random access resource is associated with the RedCap feature.

7. The method according to claim 4, wherein the feature supported by the terminal comprises the RedCap feature, and determining the first random access resource for the random access comprises:
determining that the second random access resource is unavailable, wherein the terminal is configured with the second random access resource.

8. The method according to claim 6 or 7, wherein the terminal is allowed to be configured with the second random access resource, and the terminal is not allowed to be configured with the second random access resource and the third random access resource.

9. The method according to claim 3, wherein the feature supported by the terminal comprises the eRedCap feature, and determining the first random access resource for the random access comprises any one of:
determining that the first random access resource comprises a third random access resource, wherein the terminal is configured with the second random access resource and the third random access resource;
determining that the first random access resource comprises the second random access resource, wherein the terminal is configured with the second random access resource and is not configured with the third random access resource.

10. The method according to claim 3, wherein the feature supported by the terminal comprises the eRedCap feature and the RedCap feature, and determining the first random access resource for the random access comprises:
determining that the first random access resource comprises the second random access resource, wherein the terminal is configured with the second random access resource.

11. The method according to claim 4, wherein the feature supported by the terminal comprises the RedCap feature, and determining the first random access resource for the random access comprises any one of:
determining that the second random access resource is unavailable, wherein the terminal is configured with the second random access resource, or the terminal is configured with the second random access resource, a third random access resource, and a fourth random access resource;
determining that the second random access resource and the third random access resource are unavailable, wherein the terminal is configured with the second random access resource and the third random access resource.

12. The method according to any one of claims 9 to 11, wherein the terminal is allowed to be configured with the second random access resource, and the terminal is allowed to be configured with the second random access resource and the third random access resource.

13. The method according to claim 2, wherein the terminal is not allowed to be configured with the second random access resource; the terminal does not expect to be configured with the second random access resource.

14. The method according to claim 1, further comprising:
receiving resource configuration information sent by a network device, wherein the resource configuration information comprises a feature combination information element, and the feature combination information element indicates at least one kind of feature associated with a random access resource configured by the network device.

15. The method according to claim 14, further comprising:
determining, according to the feature combination information element, that the random access resource configured by the network device is associated with the eRedCap feature and the RedCap feature, and determining that the terminal is configured with the second random access resource.

16. The method according to claim 1, wherein in response to determining that the first random access resource comprises the second random access resource, the first random access resource is configured to indicate to the network device in the random access that the feature supported by the terminal comprises at least the eRedCap feature.

17. A random access method, performed by a network device, the method comprising:
performing random access with a terminal on a first random access resource for random access, wherein the first random access resource is determined based on a feature supported by the terminal and a configuration status of a second random access resource, and the second random access resource is associated with an eRedCap feature and a RedCap feature.

18. The method according to claim 17, further comprising:
configuring random access resources for the terminal, wherein the first random access resource is determined from the random access resources configured by the network device for the terminal.

19. The method according to claim 17, wherein the network device is allowed to configure the second random access resource; the network device expects to configure the second random access resource for the terminal.

20. The method according to claim 17, wherein the network device is allowed to configure the second random access resource, and the network device is not allowed to configure the second random access resource and a third random access resource, wherein the third random access resource is associated with the eRedCap feature; the network device expects to configure the second random access resource for the terminal and not configure the third random access resource for the terminal, or the network device expects to not configure the second random access resource for the terminal and to configure the third random access resource for the terminal.

21. The method according to claim 17, wherein the network device is allowed to configure the second random access resource, and the network device is allowed to configure the second random access resource and the third random access resource; the network device expects to configure the second random access resource, the third random access resource, or the second random access resource and the third random access resource for the terminal.

22. The method according to claim 17, wherein the network device is not allowed to configure the second random access resource; the network device does not expect to configure the second random access resource for the terminal.

23. The method according to claim 18, wherein configuring the random access resources for the terminal comprises:
determining a random access resource to be configured for the terminal; and
sending resource configuration information to the terminal, wherein the resource configuration information comprises a feature combination information element, and the feature combination information element indicates at least one kind of feature associated with the random access resource configured by the network device.

24. The method according to claim 17, further comprising:
determining, according to the first random access resource comprising the second random access resource, that the feature supported by the terminal comprises at least the eRedCap feature.

25. A random access apparatus, comprising:
a first resource determination module, configured to determine a first random access resource for random access, wherein the first random access resource is determined based on a feature supported by a terminal and a configuration status of a second random access resource, and the second random access resource is associated with an eRedCap feature and a RedCap feature; and
a first random access module, configured to perform random access on the first random access resource.

26. A random access apparatus, comprising:
a second random access module, configured to perform random access with a terminal on a first random access resource for random access, wherein the first random access resource is determined based on a feature supported by the terminal and a configuration status of a second random access resource, and the second random access resource is associated with an eRedCap feature and a RedCap feature.

27. A terminal, comprising:
one or more processors;
wherein the terminal is configured to perform the random access method according to any one of claims 1 to 16.

28. A network device, comprising:
one or more processors;
wherein the network device is configured to perform the random access method according to any one of claims 17 to 24.

29. A communication device, comprising:
one or more processors;
wherein the one or more processors are configured to invoke instructions to cause the communication device to perform the random access method according to any one of claims 1 to 16 or any one of claims 17 to 24.

30. A communication system, comprising a terminal and a network device, wherein the terminal is configured to implement the random access method according to any one of claims 1 to 16, and the network device is configured to implement the random access method according to any one of claims 17 to 24.

31. A storage medium, storing instructions, wherein when the instructions are run on a communication device, the communication device is caused to perform the random access method according to any one of claims 1 to 16 or any one of claims 17 to 24.
